(19) Europäisches Patentamt
European Patent Office
Office européen des brevets

(11) EP 0 907 687 B1

(12) FASCICULE DE BREVET EUROPEEN

(45) Date de publication et mention de la délivrance du brevet:
**06.10.2004 Bulletin 2004/41**

(21) Numéro de dépôt: **98921566.0**

(22) Date de dépôt: **17.04.1998**

(51) Int Cl.[7]: **C08L 95/00**, C10C 3/02, C08G 81/02 // (C08L95/00, 53:02)

(86) Numéro de dépôt international:
**PCT/FR1998/000789**

(87) Numéro de publication internationale:
**WO 1998/047967 (29.10.1998 Gazette 1998/43)**

# (54) PROCEDE DE PREPARATION DE COMPOSITIONS BITUME/ELASTOMERE FONCTIONNALISE, LEUR UTILISATION DANS DES REVETEMENTS

VERFAHREN ZUR HERSTELLUNG VON ZUSAMMENSETZUNGEN AUS BITUMEN/FUNKTIONALISIERTEM ELASTOMER UND IHRE VERWENDUNG IN BESCHICHTUNGEN

METHOD FOR PREPARING BITUMEN/FUNCTIONALISED ELASTOMER COMPOSITIONS, USE THEREOF IN SURFACING MATERIALS

(84) Etats contractants désignés:
**AT BE CH DE DK ES FI FR GB GR IE IT LI LU NL PT SE**
Etats d'extension désignés:
**LT LV**

(30) Priorité: **21.04.1997 FR 9704893**

(43) Date de publication de la demande:
**14.04.1999 Bulletin 1999/15**

(73) Titulaire: **ELF ANTAR FRANCE**
**92400 Courbevoie (FR)**

(72) Inventeurs:
- **PLANCHE, Jean-Pascal**
  **F-38540 Saint Just Chaleyssin (FR)**
- **MALDONADO, Paul**
  **F-69360 Saint Symphorien d'Ozon (FR)**
- **NEFF, Bernard**
  **F-69340 Francheville (FR)**
- **SENNINGER, Thierry**
  **F-57700 Hayange (FR)**
- **ZINS, Annie**
  **F-38200 Seyssuel (FR)**
- **DROUILHET, Stéphane**
  **F-65000 Tarbes (FR)**

(74) Mandataire: **Jolly, Jean-Pierre**
**Cabinet Jolly**
**54, rue de Clichy**
**75009 Paris (FR)**

(56) Documents cités:
**EP-A- 0 360 656**
**WO-A-93/18092**
**FR-A- 2 265 823**
**FR-A- 2 528 439**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 907 687 B1

Printed by Jouve, 75001 PARIS (FR)

## Description

L'invention concerne un procédé de préparation de compositions bitume/élastomère fonctionnalisé. Elle se rapporte encore à l'application des compositions obtenues à la réalisation de revêtements et en particulier de revêtements superficiels routiers, d'enrobés ou encore de revêtements d'étanchéité et elle a trait également à une solution mère utilisable pour la préparation desdites compositions.

Dans la citation US-A-4011184, on décrit un procédé de préparation de compositions bitume/élastomère fonctionnalisé, dont l'un des modes de réalisation consiste à mettre en contact, en opérant à des températures comprises entre 100 °C et 200 °C et sous agitation, un bitume avec un élastomère, particulièrement un copolymère séquencé de styrène et d'un diène conjugué, en quantité représentant 0,1 % à 25 % et tout spécialement 1 % à 5 % en poids du bitume, et un acide carboxylique insaturé éthyléniquement ou un anhydride d'un tel acide, par exemple anhydride maléique, en proportion correspondant à 0,5 % à 10 % du poids de bitume et d'élastomère, ledit contact étant maintenu pendant un temps suffisant pour produire au sein du bitume un élastomère fonctionnalisé portant des groupements fonctionnels acide carboxylique ou anhydride d'acide carboxylique propres à créer directement, par formation de liaisons hydrogène, ou par addition d'un agent salifiant susceptible de réagir avec les groupements carboxyliques, des pontages thermoréversibles entre les chaînes macromoléculaires de l'élastomère et/ou entre lesdites chaînes macromoléculaires et le bitume.

Les compositions bitume/élastomère fonctionnalisé obtenues comme indiqué ci-dessus sont moins susceptibles aux phénomènes de gélification que les compositions bitume/élastomère produites par réticulation, par le soufre, d'élastomères tels que, notamment, des copolymères séquencés de styrène et d'un diène conjugué comme le butadiène ou l'isoprène au sein d'un bitume. On peut de ce fait produire des compositions bitume/élastomère fonctionnalisé ayant une teneur élevée en élastomère et pouvant jouer le rôle de concentrés. Ces compositions sont plus économiques à préparer, à stocker et à transporter que les compositions correspondantes à teneur plus faible en élastomère et elles peuvent être facilement diluées au moment de l'utilisation, par addition de bitume, pour former les liants bitume/élastomère à teneur plus faible en élastomère qui sont utilisés habituellement pour la réalisation de revêtements et en particulier de revêtements routiers.

Toutefois, les compositions bitume/élastomère fonctionnalisé, préparées en utilisant la technique mentionnée plus haut décrite dans la citation US-A-4011184, ne possèdent qu'un taux limité de groupements fonctionnels carboxyliques fixés aux chaînes macromoléculaires de l'élastomère associé au bitume et susceptibles d'induire des réticulations ou pontages desdites chaînes entre elles ou/et avec le bitume, directement ou après addition de l'agent salifiant. De ce fait les caractéristiques physico-mécaniques de telles compositions, notamment intervalle de plasticité (différence entre la température de ramollissement bille et anneau et le point de fragilité Fraass) et caractéristiques mécaniques aux basses températures d'utilisation, ne sont pas entièrement satisfaisantes.

Dans la demande de brevet français déposée le 19 octobre 1995 par la demanderesse sous le N° 9512276, on propose un procédé de préparation de compositions bitume/élastomère fonctionnalisé présentant un intervalle de plasticité élargi et des caractéristiques mécaniques améliorées en traction, lequel procédé est comparable au procédé de la citation US-A-4011184 et s'en distingue par l'utilisation d'un agent de fonctionnalisation particulier pour introduire, dans l'élastomère et éventuellement dans le bitume, les groupements fonctionnels carboxyliques ou dérivés induisant les réticulations. Cet agent de fonctionnalisation consiste en au moins un composé choisi parmi les acides thiolcarboxyliques en $C_3$ et plus, les esters d'acides thiolcarboxyliques en $C_2$ et plus avec des monoalcools et les disulfures correspondants.

On a maintenant trouvé que l'on pouvait préparer des compositions bitume/polymère ayant des caractéristiques physicomécaniques comparables à celles des compositions bitume/polymère produites par le procédé de la demande de brevet français précitée en faisant appel à d'autre agents de fonctionnalisation consistant en polyesters d'acides thiolcarboxyliques et de polyols ou en produits de réaction d'acides ou d'esters thiolcarboxyliques avec le sulfure d'éthylène.

L'invention a donc pour objet un procédé de préparation de compositions bitume/élastomère fonctionnalisé à large intervalle de plasticité, du type dans lequel on met en contact, en opérant à des températures comprises entre 100 °C et 230 °C et sous agitation, pendant une durée d'au moins dix minutes, un bitume ou mélange de bitumes avec, comptés en poids du bitume, entre 0,5 % et 25 %, plus particulièrement entre 1 % et 15 %, d'un élastomère et entre 0,01 % et 6 %, plus spécialement entre 0,05 % et 3 %, d'un agent de fonctionnalisation, ledit procédé se caractérisant en ce que l'agent de fonctionnalisation consiste en au moins un composé choisi dans le groupe constitué de :

(i) les polythiolesters carboxyliques A répondant à la formule

$$R\text{-}[OOC\text{-}\underset{\substack{|\\(SH)_t}}{R_1}\text{-}SH]_y \ ,$$

(ii) les polythioéthers B résultant de la réaction d'au moins un polythiolester A avec le sulfure d'éthylène et renfermant, en moyenne, 0,1 à 20 et plus particulièrement 0,4 à 12 motifs ($SCH_2CH_2$) par molécule A et

(iii) les polythioéthers E résultant de la réaction d'au moins un composé thiol D de formule

$$HS - \underset{\substack{|\\(SH)_t}}{R_2} - (COOX)_x$$

avec le sulfure d'éthylène et renfermant, en moyenne, 0,1 à 20 et plus particulièrement 0,4 à 12 motifs ($SCH_2CH_2$) par molécule D, avec dans ces formules, R désignant un radical y-valent hydrocarboné, éventuellement oxygéné, ayant une masse moléculaire au moins égale à 28 et pouvant aller jusqu'à 20000 et plus particulièrement jusqu'à 12000, $R_1$ représentant un radical hydrocarboné (t+2)-valent en $C_1$ à $C_{30}$, plus spécialement en $C_1$ à $C_{12}$ et tout particulièrement en $C_1$ à $C_8$, $R_2$ représentant un radical hydrocarboné (x+t+1)-valent en $C_1$ à $C_{30}$, plus spécialement en $C_1$ à $C_{12}$ et tout particulièrement en $C_1$ à $C_8$, X désignant un atome d'hydrogène ou un radical hydrocarboné monovalent $R_5$ en $C_1$ à $C_{12}$ et plus spécialement en $C_1$ à $C_8$, t représentant zéro ou un, y étant un nombre entier allant de 2 à 10, plus spécialement de 2 à 6 et tout particulièrement de 2 à 4, et x désignant un nombre entier ayant une valeur allant de 1 à 3, de préférence égale à 1 ou 2, avec $x+t \leq 3$.

Avantageusement, l'agent de fonctionnalisation est choisi parmi :

(a) les polythiolesters carboxyliques $A_1$ répondant à la formule

$$R\text{-}[OOC\text{-}R_3\text{-}SH]_y \ ,$$

(b) les polythioéthers $B_1$ résultant de la réaction d'au moins un polythiolester $A_1$ avec le sulfure d'éthylène et renfermant, en moyenne, 0,1 à 20 et plus particulièrement 0,4 à 12 motifs ($SCH_2CH_2$) par molécule $A_1$ et
(c) les polythioéthers $E_1$ résultant de la réaction d'au moins un composé thiol $D_1$ de formule

$$HS - R_4 - (COOX)_x$$

avec le sulfure d'éthylène et renfermant, en moyenne, 0,1 à 20 et plus particulièrement 0,4 à 12 motifs ($SCH_2CH_2$) par molécule $D_1$, avec dans ces formules $R_3$ représentant un radical hydrocarboné divalent en $C_1$ à $C_{12}$ et plus spécialement en $C_1$ à $C_8$, $R_4$ désignant un radical hydrocarboné (x+1)-valent en $C_1$ à $C_{12}$ et plus particulièrement en $C_1$ à $C_8$ et R, X, y et x ayant les significations données plus haut.

Les radicaux hydrocarbonés (t+2)-valents $R_1$, (x+t+1)-valents $R_2$, divalents $R_3$, (x+1)-valents $R_4$ et monovalent $R_5$ peuvent être des radicaux aliphatiques saturés, linéaires ou ramifiés, en $C_1$ à $C_{12}$, plus particulièrement en $C_1$ à $C_8$ et tout spécialement en $C_1$ à $C_6$, des radicaux aliphatiques insaturés, linéaires ou ramifiés, en $C_2$ à $C_{12}$, plus particulièrement en en $C_2$ à $C_8$ et tout spécialement en $C_2$ à $C_6$, des radicaux cycloaliphatiques en $C_4$ à $C_{12}$, plus particulièrement en $C_6$ à $C_8$ ou des radicaux aromatiques en $C_6$ à $C_{12}$, plus particulièrement en $C_6$ à $C_8$.

Les radicaux x-valents R peuvent être des radicaux hydrocarbonés macromoléculaires ou non. Des radicaux hydrocarbonés x-valents R, notamment divalents (x=2), trivalents (x=3) ou tétravalents (x=4), du type non macromoléculaire peuvent consister en radicaux aliphatiques saturés ou insaturés, linéaires ou ramifiés, en $C_2$ à $C_{30}$, plus particulièrement en $C_2$ à $C_{12}$ et notamment en $C_2$ à $C_8$, en radicaux cycloaliphatiques en $C_4$ à $C_{12}$ et de préférence en $C_6$ à $C_8$ ou encore en radicaux aromatiques en $C_6$ à $C_{12}$ et de préférence en $C_6$ à $C_8$. Des radicaux hydrocarbonés x-valents R du type macromoléculaire peuvent consister, notamment, en radicaux divalents (x=2) polyoléfiniques de formule $-[P\ ]_n-$, dans laquelle P représente un motif issu de la polymérisation d'un ou plusieurs monomères oléfiniques en $C_2$ à $C_4$ comme, par exemple, éthylène, propylène, butène ou encore butadiène, et n désigne le nombre de motifs récurrents formant la chaîne macromoléculaire du radical, ledit nombre n étant tel que le radical ait une masse moléculaire comprise entre 160 et 20000 et plus particulièrement entre 160 et 12000. Les radicaux x-valents R peuvent encore consister en radicaux divalents (x=2) oxyalkylènes ou polyoxyalkylènes de formule $-[C_hH_{2h}O]_m-C_hH_{2h}-$, dans laquelle h désigne un nombre entier allant de 2 à 4 et m représente le nombre de motifs récurrents ,identiques ou différents, formant la chaîne du radical, ledit nombre m étant tel que le radical ait une masse moléculaire comprise entre 70 et 20000 et plus particulièrement entre 70 et 12000. De tels radicaux sont notamment des radicaux (poly) oxyéthylènes, (poly)oxypropylènes ou encore (poly)oxytétraméthylènes.

Des exemples de radicaux R sont notamment les radicaux $-CH_2-CH_2-$,

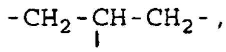

$-[CH_2]_4-$, $-[CH_2]_5-$, $-[CH_2]_6-$,

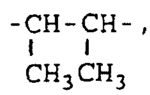 , 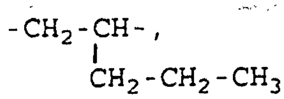 , 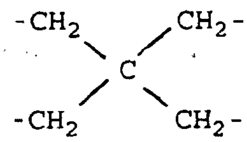 , 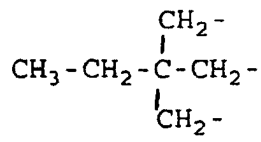 ,

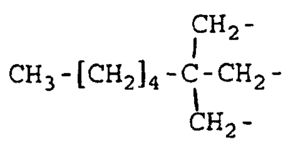

et $-[CH_2-CH_2O]_m-CH_2-CH_2-$ avec $1 \leq m \leq 250$.

Ces radicaux R dérivent respectivement, par perte des groupements OH, des polyols éthylèneglycol, glycérol, butanediol-1,4, pentanediol-1,5, hexanediol-1,6, butanediol-2,3, pentanediol-1,2, pentaerythritol, triméthylolpropane, triméthylolhexane ou encore des polyéthylèneglycols de masse moléculaire allant de 106 à 11062.

Des exemples d'agent de fonctionnalisation utilisables dans le procédé selon l'invention sont tels que les esters de l'acide β-mercaptopropionique ou de l'acide thioglycolique avec chacun des polyols particuliers cités ci-dessus et ,notamment, le thioglycolate de triméthylolpropane de formule $CH_3-CH_2-C[CH_2OOCCH_2SH]_3$, le β-mercaptopropionate de triméthylolpropane de formule $CH_3-CH_2-C[CH_2OOCCH_2CH_2SH]_3$, le β-mercaptopropionate de pentaerythrityle de formule $C[CH_2OOCCH_2CH_2SH]_4$ et le thioglycolate de pentaerythrityle de formule $C[CH_2OOCCH_2SH]_4$, ainsi que les thioéthers résultant de la réaction desdits esters avec le sulfure d'éthylène et renfermant en moyenne 0,1 à 20 et plus particulièrement 0,4 à 12 motifs $(SCH_2CH_2)$ par molécule et, notamment les thioéthers de formules $H(SCH_2CH_2)_{1,1}SCH_2COOCH_3$, $H(SCH_2CH_2)_{1,1}SCH_2CH_2COOCH_3$, $C[CH_2OOCCH_2CH_2SH]_4/0,5\ (SCH_2CH_2)$, $C[CH_2OOCCH_2CH_2SH]_4/3,5\ (SCH_2CH_2)$, $C[CH_2OOCCH_2CH_2SH]_4/3,7\ (SCH_2CH_2)$, $C[CH_2OOCCH_2SH]_4/1,4\ (SCH_2CH_2)$ et $C[CH_2OOCCH_2SH]_4/2,6\ (SCH_2CH_2)$.

Le bitume ou mélange de bitumes, que l'on utilise dans la préparation des compositions bitume/élastomère fonctionnalisé, est choisi avantageusement parmi les divers bitumes qui possèdent une viscosité cinématique à 100°C comprise entre $0,5 \times 10^{-4}$ m²/s et $3 \times 10^{-2}$ m²/s et de préférence entre $1 \times 10^{-4}$ m²/s et $2 \times 10^{-2}$ m²/s. Ces bitumes peuvent être des bitumes de distillation directe ou de distillation sous pression réduite ou encore des bitumes soufflés ou semi-soufflés, des résidus de désasphaltage au propane ou au pentane, des résidus de viscoréduction, voire même certaines coupes pétrolières ou des mélanges de bitumes et de distillats sous vide ou encore des mélanges d'au moins deux des produits venant d'être énumérés. Avantageusement, le bitume ou mélange de bitumes utilisé dans le procédé selon l'invention, outre une viscosité cinématique comprise dans les intervalles précités, présente une pénétrabilité à 25°C, définie suivant la norme NF T 66004, comprise entre 5 et 900 et de préférence entre 10 et 400.

L'élastomère, que l'on emploie dans le procédé selon l'invention et que l'on retrouve fonctionnalisé par des séquences à fonctionnalité acide carboxylique ou ester carboxylique dans les compositions bitume/élastomère fonctionnalisé issues dudit procédé, peut consister en un ou plusieurs polymères élastomériques tels que polyisoprène, polynorbornène, polybutadiène, caoutchouc butyle, copolymères statistiques éthylène/propylène (EP), terpolymères statistiques éthylène/propylène/diène (EPDM). Avantageusement, ledit élastomère est constitué en partie, la partie restante consistant en un ou plusieurs polymères tels que précités ou autres, ou en totalité d'un ou plusieurs copolymères statistiques ou séquencés de styrène et d'un diène conjugué tel que butadiène, isoprène, chloroprène, butadiène

carboxylé, isoprène carboxylé, et plus particulièrement d'un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé ou encore de styrène et d'isoprène carboxylé. Le copolymère de styrène et de diène conjugué, et en particulier chacun des copolymères précités, possède avantageusement une teneur pondérale en styrène allant de 5% à 50%. La masse moléculaire moyenne en poids du copolymère de styrène et de diène conjugué, et notamment celle des copolymères mentionnés ci-dessus, peut être comprise, par exemple, entre 10000 et 600000 daltons et se situe de préférence entre 30000 et 400000 daltons. De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé qui ont des teneurs en styrène et des masses moléculaires moyennes en poids situées dans les intervalles définis précédemment. On peut utiliser en particulier un copolymére statistique ou séquencé de styrène et de butadiène, qui possède une teneur en styrène et une masse moléculaire en poids telles que précitées et qui, en outre, présente une teneur pondérale en motifs à double liaison 1,2 issus du butadiène comprise entre 12% et 50% et de préférence allant de 20% à 40% en poids dudit copolymère.

Si besoin est, pour faciliter la fixation des séquences fonctionnelles fournies par l'agent de fonctionnalisation, à l'élastomère et éventuellement au bitume, on peut ajouter un composé peroxydé, générateur de radicaux libres aux températures comprises entre 100°C et 230°C, au milieu réactionnel formé du bitume ou mélange de bitumes, de l'élastomère et de l'agent de fonctionnalisation. Ledit composé peroxydé, utilisé en quantité allant de 0% jusqu'à, par exemple, 15% en poids de l'élastomère, peut être, notamment, choisi parmi les peroxydes de dihydrocarbyle comme le peroxyde de ditertiobutyle et le peroxyde de dicumyle.

La mise en contact du bitume ou mélange de bitumes avec l'élastomère, l'agent de fonctionnalisation et, s'il est utilisé, le composé peroxydé, qui génère un produit de réaction constituant la composition bitume/élastomère fonctionnalisé, est réalisé avantageusement en incorporant tout d'abord l'élastomère au bitume ou mélange de bitumes, en utilisant une proportion d'élastomère ayant une valeur, par rapport au bitume, choisie comme défini précédemment pour cette proportion , en opérant à des températures comprises entre 100°C et 230°C, plus particulièrement entre 120°C et 190°C, et sous agitation, pendant une durée suffisante, généralement de l'ordre de quelques dizaines de minutes à quelques heures et, par exemple, de l'ordre de 30 minutes à 8 heures, pour former un mélange homogène de bitume et d'élastomère, puis en introduisant dans ledit mélange l'agent de fonctionnalisation et ensuite, s'il est utilisé, le composé peroxydé, en quantités appropriées choisies dans les intervalles définis précédemment pour lesdites quantités, et en maintenant le tout sous agitation à des températures comprises entre 100°C et 230°C, plus particulièrement entre 120°C et 190°C, et identiques ou non aux températures d'incorporation de l'élastomère au bitume ou mélange de bitumes, pendant une durée au moins égale à 10 minutes et généralement allant de 10 minutes à 5 heures, plus particulièrement de 30 minutes à 180 minutes, pour former le produit de réaction constituant la composition bitume/élastomère fonctionnalisé.

Dans une variante de la mise en oeuvre du procédé selon l'invention, on forme, dans une première étape, un élastomère fonctionnalisé par greffage de l'agent de fonctionnalisation sur l'élastomère choisi, puis on incorpore l'élastomère fonctionnalisé obtenu bitume ou mélange de bitumes, ladite incorporation étant réalisée immédiatement après l'obtention de l'élastomère fonctionnalisé ou bien après une durée de stockage plus ou moins prolongée dudit élastomère fonctionnalisé.

La préparation de l'élastomère fonctionnalisé est réalisée, avantageusement, par mise en contact de l'élastomère choisi avec l'agent de fonctionnalisation, utilisé en quantité représentant 0,2% à 25% et plus particulièrement 0,5% à 15% du poids de l'élastomère, en opérant en masse ou dans un milieu solvant ou/et diluant et à des températures comprises entre 40°C et 250°C.

Si besoin est, pour faciliter la fixation des séquences à greffer, générées par l'agent de fonctionnalisation, sur l'élastomère, on peut ajouter, au milieu réactionnel de greffage, un initiateur radicalaire générant des radicaux libres aux températures, comprises entre 40°C et 250°C, choisies pour le greffage, lequel initiateur radicalaire est notamment un composé peroxydé et, par exemple, un peroxyde de dihydrocarbyle comme le peroxyde de lauroyle, le peroxyde de benzoyle, le peroxyde de dicumyle ou encore le peroxyde de ditertiobutyle. La quantité d'initiateur radicalaire peut varier assez largement et peut représenter jusqu'à 15%, plus spécialement 0,01% à 6% et plus particulièrement 0,05% à 3% en poids de l'élastomère.

Avantageusement, le milieu réactionnel de greffage peut renfermer, en poids de l'élastomère, 0,1% à 3,5% et plus specialement 0,1% à 2,5% d'un ou plusieurs antioxydants. En particulier, ledit milieu réactionnel peut renfermer, en poids de l'élastomère, 0,1% à 1,5% et de préférence 0,1% à 1% d'un phénol bloqué et 0% à 2% et de préférence 0% à 1,5% d'un triphosphite de dialkylphényle.

La présence du phénol bloqué seul ou de l'association phénol bloqué/triphosphite de dialkylphényle dans le milieu réactionnel de greffage, empêche la réticulation de l'élastomère au cours de l'opération de greffage. Lorsque le milieu réactionnel de greffage renferme à la fois un phénol bloqué et un triphosphite de dialkylphényle, la quantité pondérale de triphosphite est de préférence au moins égale et plus spécialement supérieure à celle du phénol bloqué.

Avantageusement, le phénol bloqué est choisi parmi les composés répondant à la formule

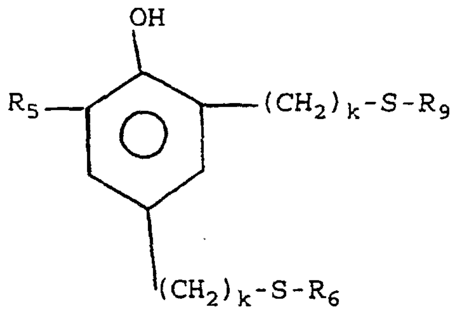

dans laquelle les symboles $R_5$, $R_6$ et $R_9$, identiques ou différents, représentent des radicaux hydrocarbonés aliphatiques monovalents en $C_1$ à $C_{18}$ et plus particulièrement en $C_1$ à $C_{12}$, tout spécialement méthyle et tertiobutyle pour $R_5$ et hexyle, heptyle, nonyle et tout particulièrement octyle pour $R_6$ et $R_9$ et k est un nombre de 0 à 5. Quant au triphosphite de dialkylphényle, il est plus particulièrement choisi parmi les composés répondant à la formule

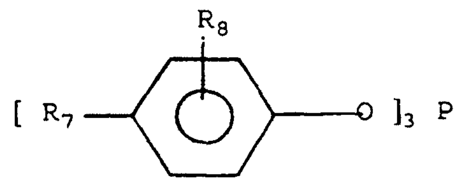

dans laquelle les symboles $R_7$ et $R_8$, identiques ou différents, représentent H ou des radicaux hydrocarbonés aliphatiques monovalents en $C_1$ à $C_{18}$ et plus particulièrement en $C_1$ à $C_{12}$, tout spécialement H, isopropyle et tertiobutyle pour $R_7$ et H, tertiobutyle, hexyle, heptyle, octyle, monyle pour $R_8$.

Comme indiqué plus haut, le greffage peut être mis en oeuvre en masse, c'est-à-dire en l'absence de tout solvant ou diluant, ou au contraire dans un milieu solvant ou/et diluant. L'élastomère peut donc représenter avantageusement 10% à 100% et de préférence 15% à 100% du poids global d'élastomère et de milieu solvant et/ou diluant. Ledit milieu solvant et/ou diluant, dans lequel on peut mettre en oeuvre la réaction de greffage, peut consister en tout liquide sans action sur les composants participant à la réaction de greffage et il peut être choisi, par exemple, parmi les hydrocarbures, notamment hydrocarbures aromatiques ou aliphatiques tels que l'éthylbenzène ou l'hexane ou un mélange d'éthylbenzène et d'hexane, liquides aux températures choisies pour le greffage.

La durée de la réaction de greffage peut varier de quelques minutes, par exemple 5 à 10 minutes, à plusieurs heures, par exemple 4 à 5 heures.

Lorsque la réaction de greffage est réalisée en opérant dans un milieu solvant et/ou diluant, l'élastomère fonctionnalisé résultant du greffage est séparé dudit milieu par toute technique connue dans ce but et par exemple, par une technique comportant une dilution du milieu réactionnel issu du greffage suivie d'une précipitation du milieu dilué dans un liquide précipitant tel que l'acétone.

Le produit de réaction, issu de la mise en contact du bitume ou mélange de bitumes avec l'élastomère, l'agent de fonctionnalisation et, s'il est utilisé, le composé peroxydé ou bien le produit résultant de l'incorporation de l'élastomère fonctionnalisé au bitume ou mélange de bitumes peut être avantageusement additionné, en opérant sous agitation à des températures comprises entre 100°C et 230°C et plus particulièrement entre 120°C et 190°C, d'un ou plusieurs additifs susceptibles de réagir avec les groupements fonctionnels carboxyliques ou esters carboxyliques portés par l'élastomère et éventuellement par le bitume pour activer ou renforcer la réticulation entre les chaînes macromoléculaires de l'élastomère ou/et entre lesdites chaînes macromoléculaires et le bitume et ainsi renforcer les caractéristiques physicomécaniques de la composition bitume/élastomère fonctionnalisé. Ces additifs réactifs peuvent être en particulier des amines, notamment polyamines, primaires ou secondaires, des alcools, des aminoalcools, des époxydes ou encore des composés métalliques.

Des additifs réactifs du type amine sont, par exemple, des diamines aromatiques telles que diamino-1,4 benzène, diamino-2,4 toluène, diaminonaphtalène, bis(amino-4 phényl) sulfone, bis(amino-4 phényl) éther, bis(amino-4 phényl) méthane, des diamines aliphatiques ou cycloaliphatiques telles que celles de formule $H_2N\text{-}R_{10}\text{-}NH_2$ où $R_{10}$ désigne un radical alkylène en $C_2$ à $C_{12}$, ou cycloalkylène en $C_6$ à $C_{12}$, par exemple éthylènediamine, diaminopropane, diaminobutane, diaminohexane, diaminooctane, diaminodécane, diaminododécane, diaminocyclohexane, diaminocyclooctane, diaminocyclododécane, des polyéthylènepolyamines ou polypropylènepolyamines telles que diéthylènetriamine, triéthylènetétramine, tétraéthylènepentamine, dipropylènetriamine, ou encore des amines ou polyamines grasses, c'est-à-dire des amines ou polyamines renfermant un radical alkyl ou alkényl en $C_{12}$ à $C_{18}$ relié à l'atome d'azote d'un groupement amine.

Des additifs réactifs du type alcool sont, en particulier, des polyols tels que diols ou triols et notamment des diols de formule $HO-R_{11}-OH$, où $R_{11}$ désigne un radical hydrocarboné, notamment un radical alkylène en $C_2$ à $C_{18}$, arylène en $C_6$ à $C_8$ et cycloalkylène en $C_6$ à $C_8$, et des polyétherdiols de formule HO

$$-\!\left[C_qH_{2q}O\right]_r\!-$$

H où q est un nombre allant de 2 à 6 et notamment égal à 2 ou 3 et r est un nombre au moins égal à 2 et par exemple allant de 2 à 20. Des exemples de tels polyols sont tels que éthylène glycol, propylène glycol, butylène glycol, diéthylène glycol, triéthylène glycol, tétraéthylène glycol, hexanediol, octanediol, polybutadiène polyhydroxylé.

Des additifs réactifs du type composé métallique sont, en particulier, des composés tels que hydroxydes, oxydes, alcoolates comme méthylates, éthylates, propylates, butylates et notamment tertio-butylates, carboxylates comme formiates et acétates, nitrites, carbonates et bicarbonates de métaux des groupes I, II, III ou VIII du Tableau Périodique des Eléments, notamment Na, K, Li, Mg, Ca, Cd, Zn, Ba, Al, Fe.

La quantité de l'additif réactif ou des additifs réactifs, que l'on incorpore au produit constituant la composition bitume/élastomère fonctionnalisé et résultant de la mise en contact du bitume ou mélange de bitumes avec l'élastomère, l'agent de fonctionnalisation et, s'il est utilisé, le composé peroxydé ou bien de l'incorporation de l'élastomère fonctionnalisé au bitume ou mélange de bitumes, peut aller de 0,01% à 10% et plus particulièrement de 0,05% à 5% du poids de bitume présent dans ledit produit de réaction. Avantageusement, ladite quantité est comprise entre une fois et quatre fois la quantité stoechiométrique correspondant à une réaction complète de l'additif réactif ou des additifs réactifs avec les groupements fonctionnels portés par l'élastomère fonctionnalisé.

Le milieu générant le produit de réaction précité constituant la composition bitume/ élastomère fonctionnalisé ou ledit produit de réaction lui-même ou encore le produit résultant de l'incorporation de l'élastomère fonctionnalisé au bitume ou mélange de bitumes peut-être encore additionné, en opérant sous agitation à des températures comprises entre 100°C et 230°C et plus particulièrement entre 120°C et 190°C, de 1% à 40% et plus particulièrement de 2% à 30%, en poids du bitume, d'un agent fluxant, qui peut consister, notamment, en une huile hydrocarbonée présentant un intervalle de distillation à pression atmosphérique déterminé selon la norme ASTM D 86-67, compris entre 100°C et 600°C et situé plus spécialement entre 150°C et 400°C. Cette huile hydrocarbonée, qui peut être notamment une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile d'origine végétale, est suffisamment "lourde" pour limiter l'évaporation au moment de son addition au bitume et en même temps suffisamment "légère" pour être éliminée au maximum après répandage de la composition bitume/ élastomère fonctionnalisé la contenant, de manière à retrouver les mêmes propriétés mécaniques qu'aurait présentées, après répandage à chaud, la composition bitume/élastomère fonctionnalisé préparée sans utiliser d'agent fluxant. Lorsque l'agent fluxant est ajouté au milieu réactionnel générant le produit de réaction constituant la composition bitume/élastomère fonctionnalisé, cet ajout peut être effectué à un moment quelconque de la constitution dudit milieu réactionnel. Si des additifs réactifs sont incorporés au produit constituant la composition bitume/élastomère fonctionnalisé, l'agent fluxant peut être ajouté audit produit avant ou après addition desdits additifs réactifs à ce dernier. La quantité d'agent fluxant est choisie dans les intervalles définis plus haut, pour être compatible avec l'usage final désiré sur le chantier.

Outre les additifs réactifs et l'agent de fluxage, on peut encore incorporer soit au milieu réactionnel générant le produit de réaction constituant la composition bitume/élastomère fonctionnalisé, à un moment quelconque de la constitution dudit milieu réactionnel, soit audit produit de réaction ou encore au produit résultant de l'incorporation de l'élastomère fonctionnalisé préformé au bitume ou mélange de bitumes, des additifs conventionnellement utilisés dans les compositions à base de bitume et de polymère, tels que des promoteurs d'adhésion de la composition bitume/ élastomère fonctionnalisé aux surfaces minérales ou encore des charges comme le talc, le noir de carbone, les pneus usagés réduits en poudrette.

Dans une forme de mise en oeuvre du procédé selon l'invention, utilisant un huile hydrocarbonée telle que définie plus haut, à titre d'agent fluxant, l'élastomère, l'agent de fonctionnalisation et éventuellement, s'il est utilisé, le composé peroxydé, sont incorporés au bitume ou mélange de bitumes sous la forme d'une solution mère de ces produits dans l'huile hydrocarbonée formant l'agent fluxant, pour constituer le milieu réactionnel générant le produit de réaction formant la composition bitume/élastomère fonctionnalisé. De même, dans la variante du procédé selon l'invention dans laquelle on préforme l'élastomère fonctionnalisé avant de l'incorporer au bitume ou mélange de bitumes, on peut effectuer ladite incorporation en utilisant l'élastomère fonctionnalisé sous la forme d'une solution mère

de ce produit dans l'huile hydrocarbonée formant l'agent fluxant.

La solution mère est préparée par mise en contact des ingrédients la composant, à savoir soit (i) huile hydrocarbonée servant de solvant, élastomère, agent de fonctionnalisation et éventuellement, s'il est utilisé, composé peroxydé ou bien (ii) huile hydrocarbonée servant de solvant et élastomère fonctionnalisé préformé, sous agitation à des températures comprises entre 10°C et 170°C et plus particulièrement entre 40°C et 120°C, et inférieures à la température de décomposition du composé peroxydé si ce dernier est présent, pendant une durée suffisante, par exemple d'environ 30 minutes à environ 90 minutes, pour obtenir une dissolution complète de l'élastomère, de l'agent de fonctionnalisation et, s'il est présent, du composé peroxydé ou bien de l'élastomère fonctionnalisé préformé dans l'huile hydrocarbonée.

Les concentrations respectives (i) de l'élastomère, de l'agent de fonctionnalisation et, s'il est présent, du composé peroxydé ou bien (ii) de l'élastomère préformé dans la solution mère peuvent varier assez largement en fonction, notamment, de la nature de l'huile hydrocarbonée utilisée pour dissoudre (i) l'élastomère, l'agent de fonctionnalisation et, s'il est utilisé, le composé peroxydé ou bien (ii) l'élastomère fonctionnalisé. Ainsi, la solution mère peut renfermer, en poids de l'huile hydrocarbonée, soit (i) entre 5% et 40% et plus particulièrement entre 10% et 30% d'élastomère, entre 0,05% et 10% et de préférence entre 0,1% et 8% d'agent de fonctionnalisation, et, en poids de l'élastomère, 0% à 15% et de préférence 0% à 10% de composé peroxydé ou bien (ii) entre 5% et 50% et plus particulièrement entre 10% et 38% d'élastomère fonctionnalisé

Pour préparer les compositions bitume/élastomère fonctionnalisé selon l'invention en faisant appel à la technique de la solution mère, on mélange la solution mère renfermant soit (i) l'élastomère, l'agent de fonctionnalisation et, s'il est utilisé, le composé peroxydé ou bien (ii) l'élastomère fonctionnalisé avec le bitume ou mélange de bitumes, en opérant à des températures comprises entre 100°C et 230°C, plus particulièrement entre 120°C et 190°C, et sous agitation, ceci étant réalisé, par exemple, en incorporant la solution mère au bitume ou mélange de bitumes maintenu sous agitation aux températures entre 100°C et 230°C et plus particulièrement entre 120°C et 190°C, puis on maintient le mélange résultant sous agitation à des températures comprises entre 100°C et 230°C, plus particulièrement entre 120°C et 190°C, par exemple aux températures utilisées pour réaliser le mélange de la solution mère avec le bitume ou mélange de bitumes, pendant une durée au moins égale à 10 minutes, et généralement allant de 10 minutes à 90 minutes, pour former un produit constituant la composition bitume/élastomère fonctionnalisé.

La quantité de solution mère incorporée au bitume ou mélange de bitumes est choisie pour fournir les quantités désirées, par rapport au bitume, soit (i) d'élastomère, d'agent de fonctionnalisation et, s'il est utilisé, de composé peroxydé ou bien (ii) d'élastomère fonctionnalisé, lesdites quantités étant dans les fourchettes définies précédemment.

Les compositions bitume/élastomère fonctionnalisé obtenues par le procédé selon l'invention peuvent être utilisées telles quelles ou bien diluées avec des proportions variables d'un bitume ou mélange de bitumes ou d'une composition selon l'invention ayant des caractéristiques différentes pour former des liants bitume/élastomère fonctionnalisé ayant des teneurs choisies en élastomère fonctionnalisé. Ces teneurs peuvent être soit égales (compositions non diluées) aux teneurs en élastomère fonctionnalisé des compositions bitume/élastomère fonctionnalisé initiales correspondantes, soit différentes (compositions diluées) de ces dernières teneurs. La dilution des compositions bitume/ élastomère fonctionnalisé selon l'invention avec un bitume ou mélange de bitumes ou avec une composition selon l'invention de caractéristiques différentes peut être réalisée soit directement à la suite de l'obtention desdites compositions, lorsqu'une utilisation quasi immédiate des liants bitume/élastomère fonctionnalisé résultants est requise, ou bien encore après une durée de stockage plus ou moins prolongée des compositions bitume/ élastomère fonctionnalisé, lorsqu'une utilisation différée des liants bitume/élastomère fonctionnalisé résultants est envisagée.

Le bitume ou mélange de bitumes utilisé pour la dilution d'une composition bitume/élastomère fonctionnalisé selon l'invention peut être choisi parmi les bitumes définis précédemment comme convenant à la préparation des compositions bitume/élastomère fonctionnalisé.

La dilution d'une composition bitume/élastomère fonctionnalisé selon l'invention par un bitume ou mélange de bitumes ou par une seconde composition selon l'invention à teneur plus faible en élastomère fonctionnalisé, pour former un liant bitume/élastomère fonctionnalisé à teneur choisie en élastomère fonctionnalisé inférieure à celle de la composition bitume/élastomère fonctionnalisé à diluer, est généralement réalisée en mettant en contact, sous agitation et à des températures comprises entre 100°C et 230°C et plus particulièrement entre 120°C et 190°C, des proportions convenables de la composition bitume/élastomère fonctionnalisé à diluer et de bitume ou mélange de bitumes ou de seconde composition bitume/élastomère fonctionnalisé.

Les liants bitume/élastomère fonctionnalisé consistant en les compositions bitume/élastomère fonctionnalisé selon l'invention ou résultant de la dilution desdites compositions, par un bitume ou mélange de bitumes ou par une autre composition bitume/élastomère fonctionnalisé selon l'invention, jusqu'à la teneur désirée en élastomère fonctionnalisé dans lesdits liants, sont applicables, directement ou après mise en émulsion aqueuse, à la réalisation de revêtements routiers du type enduit superficiel, à la production d'enrobés mis en place à chaud ou à froid, ou encore à la réalisation de revêtements d'étanchéité.

L'invention est illustrée par les exemples suivants donnés à titre non limitatif.

Dans ces exemples, les quantités et pourcentages sont exprimés en poids, sauf indication contraire.
En outre, les caractéristiques rhéologiques et mécaniques des bitumes ou des compositions bitume/élastomère fonctionnalisé auxquelles on fait référence dans lesdits exemples sont les suivantes :

- pénétrabilité, exprimée en 1/10 de mm et déterminée selon la norme NF T 66004,
- température de ramollissement bille et anneau, exprimée en °C et déterminée par l'essai bille et anneau défini par la norme NF T 66008,
- caractéristiques rhéologiques en traction déterminées selon la norme NF T 46002 et comportant les grandeurs :
  . élongation à la rupture εr en %,
  . contrainte à la rupture σr en daN/$cm^2$,
- indice de PFEIFFER (en abrégé IP) calculé par la relation

$$IP = \frac{20 - 500A}{1 + 50\ A}$$

avec

$$A = \frac{\log_{10}800 - \log_{10}pen}{TAB - 25}$$

où "pen" et "TBA" désignent respectivement la pénétrabilité et la température bille et anneau, telles que définies plus haut, cet indice fournissant une indication de la susceptibilité thermique de la composition.

EXEMPLES 1 à 9 :

On préparait des compositions bitume/élastomère témoins (exemples 1 à 3) et des compositions bitume/élastomère fonctionnalisé selon l'invention (exemples 4 à 9) pour en évaluer et comparer les caractéristiques physicomécaniques.
On opérait dans les conditions suivantes :

. Exemple 1 (témoin) :
Dans un réacteur maintenu à 180°C et sous agitation, on introduisait 940 parties d'un bitume ayant une pénétrabilité à 25°C, déterminée selon les modalités de la norme NF T 66004, égale à 74 et 60 parties d'un copolymère séquencé de styrène et de butadiène à titre d'élastomère, ledit copolymère ayant une masse moléculaire moyenne en poids égale à 250 000 daltons et renfermant 25 % de styrène. Après 5 heures de mélange sous agitation à 180°C, on obtenait une masse homogène constituant la composition bitume/élastomère (témoin I).

. Example 2 (témoin) :
Dans un réacteur maintenu à 180°C et sous agitation, on introduisait 940 parties du bitume utilisé dans l'exemple 1 et 60 parties du copolymère séquencé de styrène et de butadiène employé dans ledit exemple 1. Après 5 heures de mélange sous agitation à 180°C, on obtenait une masse homogène.
Au contenu du réacteur, on incorporait alors, à 180°C et sous agitation, 4 parties d'une source de soufre radicalaire constituée d'un polysulfure de ditertiododécyle, commercialisé par ELF ATOCHEM sous l'appellation TPS 32, et l'on maintenait ensuite le milieu réactionnel ainsi formé, à ladite température et sous agitation, pendant une durée de quatre heures pour former une composition bitume/ élastomère réticulée au soufre (témoin II).

. Exemple 3 (témoin) :
On préparait une composition bitume/élastomère réticulée au soufre (témoin III), en opérant comme décrit dans l'exemple 2, avec toutefois remplacement du polysulfure par 1,1 partie de soufre.

. Exemple 4 (selon l'invention) :
On préparait une composition bitume/élastomère fonctionnalisé en opérant comme décrit dans l'exemple 2, avec toutefois remplacement du polysulfure par 3 parties d'un agent de fonctionnalisation selon l'invention consistant en β-mercaptopropionate de pentaerythrityle de formule $C[CH_2OOCCH_2CH_2SH]_4$.

. Example 5 (selon l'invention) :
En opérant comme décrit dans l'example 4, on préparait une composition bitume/élastomère fonctionnalisé. A cette composition, maintenue sous agitation à 180°C, on ajoutait alors 0,5 partie d'une lessive de soude aqueuse à 50% en poids de soude (NaOH) anhydre et maintenait le tout, sous agitation, à 180°C pendant une heure pour

hydrolyser les groupements fonctionnels esters.

. Exemple 6 (selon l'invention) :

On préparait une composition bitume/élastomère fonctionnalisé en opérant comme décrit dans l'exemple 4 avec toutefois remplacement du β-mercaptoacétate de pentaerythrityle, utilisé comme agent de fonctionnalisation, par la même quantité de β-mercaptoacétate de triméthylolpropane de formule $CH_3$-$CH_2$-C[$CH_2OOCCH_2CH_2SH$]$_3$.

. Exemple 7 (selon l'invention) :

En opérant comme décrit dans l'exemple 6, on préparait une composition bitume/élastomère fonctionnalisé. A cette composition, maintenue sous agitation à 180°C, on ajoutait alors 0,5 partie d'une lessive de soude aqueuse à 50% en poids de soude (NaOH) anhydre et maintenait le tout, sous agitation, à 180°C pendant une heure pour hydrolyser les groupements fonctionnels esters.

. Exemple 8 (selon l'invention) :

On préparait une composition bitume/élastomère fonctionnalisé en opérant comme décrit dans l'exemple 4, avec toutefois remplacement du β-mercaptoacétate de pentaerythrityle, utilisé comme agent de fonctionnalisation, par la même quantité du produit de réaction du thioglycolate de méthyle avec le sulfure d'éthylène renfermant en moyenne 1,1 motif ($SCH_2CH_2$) par molécule de thioglycolate

. Exemple 9 (selon l'invention) :

En opérant comme décrit dans l'exemple 8, on préparait une composition bitume/élastomère fonctionnalisé. A cette composition, maintenue sous agitation à 180°C, on ajoutait alors 0,5 partic d'une lessive de potasse aqueuse à 50% en poids de potasse (KOH) anhydre et maintenait le tout, sous agitation, à 180°C pendant une heure pour hydrolyser les groupements fonctionnels esters.

Pour les composition bitume/élastomère témoins des exemple 1 à 3, ainsi que pour chacune des compositions bitume/élastomère fonctionnalisé obtenues selon l'invention comme indiqué dans les exemples 4 à 9, on a déterminé les caractéristiques suivantes :

- viscosité à 60°C,
- pénétrabilité à 25°C,
- température de ramollissement bille et anneau ,
- indice de PFEIFFER ,
- caractéristiques rhéologiques en traction à 5°C, à savoir :
  - contrainte à la rupture (σr),
  - élongation à la rupture (εr).

Les résultats obtenus sont rassemblés dans le tableau suivant.

TABLEAU

| **EXEMPLES** | Bitume pur | 1 | 2 | 3 | 4 |
|---|---|---|---|---|---|
| Pénétration à 25°C (0,1 mm) | 74 | 65 | 62 | 58 | 44 |
| Température de Bille et Anneau (°C) | 46,7 | 69 | 73 | 75 | 82,2 |
| Indice de Pfeiffer | -1,1 | 3,4 | 3,9 | 4 | 4,3 |
| Viscosité à 60°C (Pa.s) | 180 | 3400 | 13600 | 14000 | >50000 |
| Elongation $\varepsilon_r$ (%) | 0 | 130 | >700 | >700 | >700 |
| Contrainte $\sigma_r$ (daN/cm$^2$) | 0 | 40 | 10 | 11 | 16 |
| **EXEMPLES** | 5 | 6 | 7 | 8 | 9 |
| Pénétration à 25°C (0,1 mm) | 37 | 49 | 46 | 48 | 45 |
| Température de Bille et Anneau (°C) | 83 | 81 | 83 | 81 | 84 |
| Indice de Pfeiffer | 3,9 | 4,4 | 4,4 | 4,3 | 4,5 |
| Viscosité à 60°C (Pa.s) | >50000 | >50000 | >50000 | >50000 | >50000 |
| Elongation $\varepsilon_r$ (%) | >700 | >700 | >700 | >700 | >700 |
| Contrainte $\sigma_r$ (daN/cm$^2$) | 18 | 15 | 19 | 16 | 19 |

Au vu des résultats rassemblés dans le tableau, on peut faire les remarques suivantes :

- la comparaison des résultats des exemples 2 et 3 à ceux de l'exemple 1 fait ressortir que l'ajout de polysulfure ou de soufre au mélange de bitume et d'élastomère conduit, du fait d'une réticulation par effet donneur de soufre, à une amélioration de la consistance (augmentation de la température de Bille et Anneau),ainsi qu'à une diminution de la susceptibilité thermique (augmentation de l'indice de Pfeiffer) et à une amélioration des caractéristiques d'élasticité (augmentation de l'élongation en traction $\varepsilon_r$ et de la contrainte à l'élongation maximale $\sigma_r$);
- la comparaison des résultats des exemples 4, 6 et 8 selon l'invention à ceux des exemples témoins 2 et 3 montre que l'emploi de l'agent de fonctionnalisation selon l'invention en remplacement du TPS ou du soufre conduit, du fait d'une réticulation par les séquences fonctionnelles greffées issues de l'agent de fonctionnalisation, à une nette amélioration de la consistance (augmentation de la température de Bille et Anneau), de la viscosité à 60°C et des caractéristiques d'élasticité (contrainte à l'élongation maximale $\sigma_r$ supérieure);
- la comparaison des résultats des exemples 4 et 5, 6 et 7, 8 et 9 fait également ressortir que l'ajout d'une base forte (NaOH, KOH) aux compositions bitume/élastomère fonctionnalisé obtenues selon l'invention renforce encore la consistance (augmentation de la température de Bille et Anneau) et les caractéristiques d'élasticité (augmentation de la contrainte à l'élongation maximale $\sigma_r$).

. <u>Exemple 10</u> (selon l'invention) :

On préparait une composition bitume/élastomère fonctionnalisé en opérant comme décrit dans l'exemple 4, avec toutefois remplacement de l'élastomère par la même quantité d'un copolymère diséquencé de styrène et de butadiène à charnière statistique ayant une masse moléculaire moyenne en poids égale à 150000 et renfermant 25% de styrène, dont 17% sous forme de bloc, et 75% de butadiène, dont 35% sous forme de motifs à double liaison 1,2.
La composition bitume/élastomère fonctionnalisé ainsi obtenue était ensuite diluée avec le même bitume que celui défini dans l'exemple 1 jusqu'à une teneur finale de 3,5% en élastomère fonctionnalisé dans la composition diluée. L'opération de dilution était effectuée à 180°C et sous agitation et la composition diluée formée en fin d'addition du bitume était encore maintenue sous agitation à 180°C pendant une heure pour parfaire son homogénéisation.
La composition diluée obtenue présentait les caractéristiques suivantes :

- pénétration à 25°C (1/10 mm) : 55
- température de Bille et Anneau (°C) : 72
- Indice de Pfeiffer : 4,2
- Contrainte $\sigma_r$ à 5°C (daN/cm$^2$) : 16
- Elongation εr à 5°C (%) : >700

. <u>Exemple 11</u> (selon l'invention) :

On préparait tout d'abord un élastomère fonctionnalisé en greffant en solution, comme indiqué ci-après, un agent de fonctionnalisation selon l'invention consistant en β-mercaptopropionate de pentaerythrityle sur un élastomère consistant en un copolymère diséquencé de styrène et de butadiène renfermant 25% de styrène et 75% de butadiène et possédant une masse moléculaire moyenne en poids égale à 108800 daltons et un indice de polymolécularité (rapport de la masse moléculaire en poids à la masse moléculaire en nombre) égal à 1,1.
On opérait dans un réacteur en acier inoxydable de 2 litres, équipé d'un agitateur à ruban et pourvu d'une régulation de température.
Dans le réacteur maintenu sous azote, on introduisait 432 parties du copolymère de styrène et de butadiène, puis successivement 1730 parties d'éthylbenzène, 2,16 parties d'un antioxydant commrecialisé par CIBA sous le nom Irganox 1520 D, phénol bloqué répondant à la formule

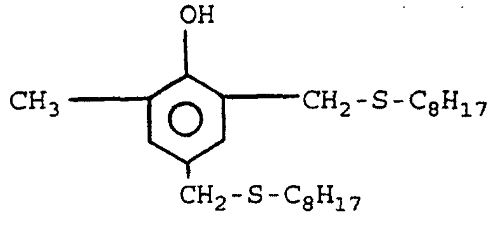
,

et 48 parties de l'agent de fonctionnalisation.

Le mélange était chauffé progressivement à 92°C sous agitation (vitesse de rotation de l'agitateur égale à 250 tours/minute). Après dissolution du copolymère, on ajoutait une solution une solution comprenant 0,67 partie de peroxyde de benzoyle à 30% dans l'eau et 20 parties d'éthylbenzène. Au bout de 60 minutes, l'opération était répétée avec une solution comprenant 0,33 partie de peroxyde de benzoyle à 30% dans l'eau et 20 parties d'éthylbenzène.

Après la seconde addition de peroxyde de benzoyle, le contenu du réacteur était agité à 92°C pendant 180 minutes avec la vitesse précitée de rotation de l'agitateur.

A l'issue de cette période, on ajoutait au milieu réactionnel une solution comprenant 4,32 parties d'Irganox 1520 D et 5,18 parties d'Irgafos 168,antioxydant ayant la formule $[t\text{-}C_4H_9\text{-}C_6H_4\text{-}O\text{-}]_3\text{-}P$ et commercialisé par CIBA, dissous dans 20 parties d'éthylbenzène. La solution de polymère issue du greffage était additionnée de 2000 parties d'éthylbenzène pour diluer le polymère, puis la solution diluée obtenue était introduite dans 40000 parties d'acétone pour précipiter le polymère greffé formant l'élastomère fonctionnalisé. Ce dernier était alors récupéré par filtration et le polymère imprégné d'acétone était laissé sous un courant d'air pendant environ 30 minutes afin de le débarrasser de la majeure partie du solvant l'imprégnant. Ledit polymère était ensuite remis en solution dans 1200 parties d'un mélange de 20% d'éthylbenzène et de 80% d'hexane renfermant 14 parties d'Irgafos 168 et 12 parties d'Irganox 1520 D. Le polymère greffé était placé dans une étuve sous vide maintenue à température ambiante (environ 25°C) pour éliminer sous vide le solvant qu'il contenait encore et le polymère substantiellement exempt de solvant était séché par maintien dans l'étuve sous vide à 60°C pendant 2 heures.

La teneur de l'élastomère greffé en β-mercaptopropionate de pentaerythrityle, déterminée par spectroscopie infra-rouge, était égale à 1,5% en poids.

Comme déterminé à partir des résultats d'une analyse de l'élastomère greffé par chromatographie d'exclusion stérique, ledit élastomère greffé présentait une masse moléculaire moyenne en poids égale à 357400 daltons et un indice de polymolécularité égal à 2,8. Le chromatogramme était caractérisé par la présence de deux populations distinctes donnant une bipopulation.

L'élastomère fonctionnalisé obtenu comme décrit ci-dessus était incorporé à un bitume similaire à celui décrit dans l'exemple 1 pour produire une composition bitume/élastomère fonctionnalisé en opérant comme suit.

Dans un réacteur maintenu à 180°C et sous agitation, on introduisait 965 parties de bitume et 35 parties de l'élastomère fonctionnalisé, sous la forme d'une solution mère dans une huile hydrocarbonée d'intervalle de distillation à pression atmosphérique, selon la norme ASTM D 86-67, allant de 200°C à 360°C, laquelle solution mère renfermait, en poids de l'huile hydrocarbonée,20% d'élastomère fonctionnalisé. Après une heure de mélange sous agitation à 180°C, on obtenait une masse homogène constituant la composition bitume/élastomère fonctionnalisé. Cette composition renfermait 3,6% d'élastomère fonctionnalisé par rapport au bitume de départ.

La composition bitume/élastomère fonctionnalisé obtenue présentait les caractéristiques suivantes, déterminées après stabilisation par étuvage à 50°C pendant 15 jours en film de 1 mm d'épaisseur :

- pénétration à 25°C (1/10 mm) : 90
- température de Bille et Anneau (°C) : 60
- Indice de Pfeiffer : 2,7
- Contrainte $\sigma_r$ à -10°C (MPa) : 0,6
- Elongation εr à -10°C (%) : >700

. <u>Exemple 12</u> (selon l'invention) :

On préparait un élastomère fonctionnalisé en procédant comme décrit dans l'exemple 11, avec toutefois utilisation de 48 parties de di β-mercaptoacétate d'éthylène glycol comme agent de fonctionnalisation en remplacement du β-mercaptopropionate de pentaerythrityle.

L'élastomère fonctionnalisé renfermait 1,4%, en poids, de dimercaptoacétate d'éthylène glycol et présentait une masse moléculaire moyenne en poids égale à 465900 et un indice de polymolécularité égal à 2,7 .

A partir de cet élastomère greffé, on préparait une composition bitume/élastomère fonctionnalisé renfermant 3,5% d'élastomère fonctionnalisé, en opérant comme décrit dans l'exemple 11.

La composition bitume/élastomère fonctionnalisé obtenue présentait les caractéristiques suivantes, après stabilisation comme indiqué dans l'exemple 11 :

- pénétration à 25°C (1/10 mm) : 100
- température de Bille et Anneau (°C) : 57
- Indice de Pfeiffer : 2,4
- Contrainte $\sigma_r$ à -10°C (MPa) : 0,4
- Elongation εr à -10°C.(%) : >700

. Exemple 13 (selon l'invention) :

On préparait un élastomère fonctionnalisé en procédant comme pour l'exemple 11, mais en utilisant, à titre d'agent de fonctionnalisation, le di β-mercaptoacétate d'un polyéthylène glycol ayant une masse moléculaire moyenne de 300g/mole.

On utilisait pour cet exemple 216 parties du copolymère de styrène et de butadiène, 865 parties d'éthylbenzène, 1,08 partie d'Irganox 1520D et 24 parties d'agent de fonctionnalisation.

Le mélange précité était chauffé progressivement à 92°C sous agitation (vitesse de rotation de l'agitateur égale à 250 tours/minute). Après dissolution du copolymère, on ajoutait une solution une solution comprenant 0,34 partie de peroxyde de benzoyle à 30% dans l'eau et 20 parties d'éthylbenzène. Au bout de 60 minutes, l'opération était répétée avec une solution comprenant 0,17 partie de peroxyde de benzoyle à 30% dans l'eau et 20 parties d'éthylbenzène.

Après la seconde addition de peroxyde de benzoyle, le contenu du réacteur était agité à 92°C pendant 180 minutes avec la vitesse précitée de rotation de l'agitateur.

A l'issue de cette période, on ajoutait au milieu réactionnel une solution comprenant 2,16 parties d'Irganox 1520 D et 2,59 parties d'Irgafos 168,antioxydant ayant la formule $[t\text{-}C_4H_9\text{-}C_6H_4\text{-}O\text{-}]_3\text{-}P$ et commercialisé par CIBA, dissous dans 20 parties d'éthylbenzène. La solution de polymère issue du greffage était additionnée de 2000 parties d'éthylbenzène pour diluer le polymère, puis la solution diluée obtenue était introduite dans 40000 parties d'acétone pour précipiter le polymère greffé formant l'élastomère fonctionnalisé. Ce dernier était alors récupéré par filtration et le polymère imprégné d'acétone était laissé sous un courant d'air pendant environ 30 minutes afin de le débarrasser de la majeure partie du solvant l'imprégnant. Ledit polymère était ensuite remis en solution dans 1200 parties d'un mélange de 20% d'éthylbenzène et de 80% d'hexane renfermant 7 parties d'Irgafos 168 et 6 parties d'Irganox 1520 D. Le polymère greffé était placé dans une étuve sous vide maintenue à température ambiante (environ 25°C) pour éliminer sous vide le solvant qu'il contenait encore et le polymère substantiellement exempt de solvant était séché par maintien dans l'étuve sous vide à 60°C pendant 2 heures.

La teneur de l'élastomère greffé en di β-mercaptopropionate de polyéthylèneglycol , déterminée par spectroscopie infra-rouge, était égale à 0,6 en poids.

Comme déterminé à partir des résultats d'une analyse de l'élastomère greffé par chromatographie d'exclusion stérique, ledit élastomère greffé présentait une masse moléculaire moyenne en poids égale à 154600 daltons et un indice de polymolécularité égal à 1,5. Le chromatogramme était caractérisé par la présence de deux populations distinctes donnant une bipopulation.

A partir de cet élastomère greffé, on préparait une composition bitume/élastomère fonctionnalisé renfermant 3,5% d'élastomère fonctionnalisé, en opérant comme suit.

Dans un réacteur maintenu à 180°C et sous agitation, on introduisait 965 parties d'un bitume similaire à celui défini dans l'exemple 1 et 35 parties de l'élastomère fonctionnalisé. Après 6 heures de mélange sous agitation à 180°C, on obtenait une masse homogène constituant la composition bitume/élastomère fonctionnalisé.

La composition bitume/élastomère fonctionnalisé obtenue présentait les caractéristiques suivantes :

- pénétration à 25°C (1/10 mm) : 50
- température de Bille et Anneau (°C) : 78
- Indice de Pfeiffer : 4
- Contrainte $\sigma_r$ à 5°C ($daN/cm^2$) : 14
- Elongation εr à 5°C.(%) : >700

## Revendications

1. Procédé de préparation de compositions bitume/élastomère fonctionnalisé à large intervalle de plasticité, du type dans lequel on met en contact, en opérant à des températures comprises entre 100 °C et 230 °C et sous agitation, pendant une durée d'au moins dix minutes, un bitume ou mélange de bitumes avec, comptés en poids du bitume, entre 0,5 % et 25 % d'un élastomère et entre 0,01 % et 6 % d'un agent de fonctionnalisation ledit procédé **se caractérisant en ce que** l'agent de fonctionnalisation consiste en au moins un composé choisi dans le groupe constitué de :

    (i) les polythiolesters carboxyliques A répondant à la formule

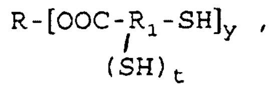

(ii) les polythioéthers B résultant de la réaction d'au moins un polythiolester A avec le sulfure d'éthylène et renfermant, en moyenne, 0,1 à 20 et plus particulièrement 0,4 à 12 motifs ($SCH_2$ $CH_2$) par molécule A et

(iii) les polythioéthers E résultant de la réaction d'au moins un composé thiol D de formule

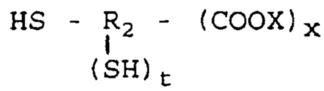

avec le sulfure d'éthylène et renfermant, en moyenne, 0,1 à 20 et plus particulièrement 0,4 à 12 motifs ($SCH_2CH_2$) par molécule D, avec dans ces formules, R désignant un radical y-valent hydrocarboné, éventuellement oxygéné, ayant une masse moléculaire au moins égale à 28 et pouvant aller jusqu'à 20000 et plus particulièrement jusqu'à 12000, $R_1$ représente un radical hydrocarboné (t+2)-valent en $C_1$ à $C_{30}$, $R_2$ représente un radical hydrocarboné (x+t+1)-valent en $C_1$ à $C_{30}$, X désigne un atome d'hydrogène ou un radical hydrocarboné monovalent $R_5$ en $C_1$ à $C_{12}$, t représente zéro ou un, y est un nombre entier allant de 2 à 10 et x désigne un nombre entier ayant une valeur allant de 1 à 3 avec $x+t \leq 3$.

2. Procédé selon la revendication 1, **caractérisé en ce que** l'agent de fonctionnalisation consiste en au moins un composé choisi parmi :

(a) les polythiolesters carboxyliques $A_1$ répondant à la formule

$$R\text{-}[OOC\text{-}R_3\text{-}SH]_y ,$$

(b) les polythioéthers $B_1$ résultant de la réaction d'au moins un polythiolester $A_1$ avec le sulfure d'éthylène et renfermant, en moyenne, 0,1 à 20 et plus particulièrement 0,4 à 12 motifs ($SCH_2$ $CH_2$) par molécule $A_1$ et

(c) les polythioéthers $E_1$ résultant de la réaction d'au moins un composé thiol $D_1$ de formule

$$HS\text{ - }R_4\text{ - }(COOX)_x$$

avec le sulfure d'éthylène et renfermant, en moyenne, 0,1 à 20 et plus particulièrement 0,4 à 12 motifs ($SCH_2CH_2$) par molécule $D_1$, avec dans ces formules $R_3$ représentant un radical hydrocarboné divalent en $C_1$ à $C_{12}$ et plus spécialement en $C_1$ à $C_8$, $R_4$ désignant un radical hydrocarboné (x+1)-valent en $C_1$ à $C_{12}$ et plus particulièrement en $C_1$ à $C_8$ et R, X, y et x ayant les significations données dans la revendication 1.

3. Procédé selon la revendication 1 ou 2, **caractérisé en ce que** dans la formule des polythiolesters carboxyliques A ou $A_1$, y est un nombre entier allant de 2 à 6 et tout particulièrement de 2 à 4 et **en ce que** dans la formule des composés thiols D ou $D_1$, x est égal à 1 ou 2.

4. Procédé selon l'une des revendications 1 à 3, **caractérisé en ce que** les radicaux hydrocarbonés (t+2)-valents $R_1$, (x+t+1)-valents $R_2$, divalents $R_3$, (x+1) -valents $R_4$ et monovalent $R_5$ sont des radicaux aliphatiques saturés, linéaires ou ramifiés, en $C_1$ à $C_{12}$, plus particulièrement en $C_1$ à $C_8$ et tout spécialement en $C_1$ à $C_6$, des radicaux aliphatiques insaturés, linéaires ou ramifiés, en $C_2$ à $C_{12}$, plus particulièrement en en $C_2$ à $C_8$ et tout spécialement en $C_2$ à $C_6$, des radicaux cycloaliphatiques en $C_4$ à $C_{12}$, plus particulièrement en $C_6$ à $C_8$ ou des radicaux aromatiques en $C_6$ à $C_{12}$, plus particulièrement en $C_6$ à $C_8$.

5. Procédé selon l'une des revendications 1 à 4, **caractérisé en ce que**, dans la formule de l'agent de fonctionnalisation, les radicaux x-valents R consistent en radicaux aliphatiques saturés ou insaturés, linéaires ou ramifiés, en $C_2$ à $C_{30}$, plus particulièrement en $C_2$ à $C_{12}$ et notamment en $C_2$ à $C_8$, en radicaux cycloaliphatiques en $C_4$ à $C_{12}$ et de préférence en $C_6$ à $C_8$ ou encore en radicaux aromatiques en $C_6$ à $C_{12}$ et de préférence en $C_6$ à $C_8$.

6. Procédé selon l'une des revendications 1 à 4, **caractérisé en ce que**, dans la formule de l'agent de fonctionnalisation, les radicaux x-valents R sont des radicaux hydrocarbonés divalents polyoléfiniques de formule $-[P]_n-$, dans laquelle P représente un motif issu de la polymérisation d'un ou plusieurs monomères oléfiniques en $C_2$ à $C_4$, notamment éthylène, propylène, butène ou encore butadiène, et n désigne le nombre de motifs récurrents formant la chaîne du radical, ledit nombre n étant tel que le radical ait une masse moléculaire comprise entre 160 et 20000 et plus particulièrement entre 160 et 12000.

7. Procédé selon l'une des revendications 1 à 4, **caractérisé en ce que**, dans la formule de l'agent de fonctionnalisation, les radicaux x-valent R consistent en radicaux divalents oxyalkylènes ou polyoxyalkylènes de formule $-[C_hH_{2h}O]_m-C_hH_{2h}-$, dans laquelle h désigne un nombre entier allant de 2 à 4 et m représente le nombre de motifs récurrents ,identiques ou différents, formant la chaîne du radical, ledit nombre m étant tel que le radical ait une masse moléculaire comprise entre 70 et 20000 et plus particulièrement entre 70 et 12000,lesdits radicaux étant en particulier des radicaux choisis parmi les radicaux oxyéthylène, polyoxyéthylènes, oxypropylène, polyoxypropylènes, oxytétraméthylène et polyoxytétraméthylènes.

8. Procédé selon l'une des revendications 1 à 7, **caractérisé en ce que** l'agent de fonctionnalisation est utilisé en quantité comprise entre 0,05 % et 3 % en poids du bitume.

9. Procédé selon l'une des revendications 1 à 8, **caractérisé en ce que** la quantité d'élastomère est comprise entre 1 % et 15 % en poids du bitume.

10. Procédé selon l'une des revendications 1 à 9, **caractérisé en ce que** le bitume ou mélange de bitumes est choisi parmi les bitumes ayant une viscosité cinématique à 100 °C comprise entre $0,5x10^{-4}$ $m^2/s$ et $3x10^{-2}$ $m^2/s$ et de préférence entre $1x10^{-4}$ $m^2/s$ et $2x10^{-2}$ $m^2/s$.

11. Procédé selon la revendication 10, **caractérisé en ce que** le bitume ou mélange de bitumes présente une pénétrabilité à 25 °C, définie suivant la norme NF T 66004, comprise entre 5 et 900 et de préférence entre 10 et 400.

12. Procédé selon l'une des revendications 1 à 11, **caractérisé en ce que** l'élastomère est choisi parmi les copolymères statistiques ou séquences de styrène et d'un diène conjugué, ledit diène étant en particulier tel que butadiène, isoprène, chloroprène, butadiène carboxylé, isoprène carboxylé.

13. Procédé selon la revendication 12 **caractérisé en ce que** le copolymère de styrène et de diène conjugué renferme, en poids, 5 % à 50 % de styrène.

14. Procédé selon la revendication 12 ou 13, **caractérisé en ce que** la masse moléculaire moyenne en poids du copolymère de styrène et de diène conjugué est comprise entre 10 000 et 600 000 daltons et de préférence entre 30 000 et 400 000 daltons.

15. Procédé selon l'une des revendications 1 à 14, **caractérisé en ce que** l'on ajoute un composé peroxydé, notamment un peroxyde de dihydrocarbyle, générant des radicaux libres aux températures comprises entre 100 °C et 230 °C, au milieu réactionnel formé du bitume ou mélange de bitumes, de l'élastomère et de l'agent de fonctionnalisation, ledit composé peroxydé étant utilisé en quantité allant, en particulier, jusqu'à 15 % en poids de l'élastomère.

16. Procédé selon l'une des revendications 1 à 15, **caractérisé en ce que** la mise en contact du bitume ou mélange de bitumes avec l'élastomère, l'agent de fonctionnalisation et, s'il est utilisé, le composé peroxydé est réalisée en incorporant tout d'abord l'élastomère au bitume ou mélange de bitumes, en opérant à des températures comprises entre 100 °C et 230 °C, plus particulièrement entre 120 °C et 190 °C, et sous agitation, pendant une durée de quelques dizaines de minutes à quelques heures, en particulier de 30 minutes à 8 heures, pour former un mélange homogène de bitume et d'élastomère, puis en introduisant dans ledit mélange l'agent de fonctionnalisation et ensuite, s'il est utilisé, le composé peroxydé en quantités appropriées et en maintenant le tout sous agitation à des températures comprises entre 100 °C et 230 °C, plus particulièrement entre 120 °C et 190 °C, et identiques ou non aux températures d'incorporation de l'élastomère au bitume ou mélange de bitumes, pendant une durée au moins égale à 10 minutes et généralement allant de 10 minutes à 5 heures, plus particulièrement de 30 minutes à 180 minutes, pour former un produit de réaction constituant la composition bitume/élastomère fonctionnalisé.

17. Procédé selon l'une des revendications 1 à 14, **caractérisé en ce que**, dans une première étape, on forme un

élastomère fonctionnalisé, par greffage de l'agent de fonctionnalisation sur l'élastomère choisi, puis on incorpore l'élastomère fonctionnalisé obtenu bitume ou mélange de bitumes, ladite incorporation étant réalisée immédiatement après l'obtention de l'élastomère fonctionnalisé ou bien après une durée de stockage plus ou moins prolongée dudit élastomère fonctionnalisé.

**18.** Procédé selon la revendication 17, **caractérisé en ce que** la préparation de l'élastomère fonctionnalisé par greffage est mise en oeuvre par mise en contact de l'élastomère choisi avec l'agent de fonctionnalisation, utilisé en quantité représentant 0,2% à 25% et plus particulièrement 0,5% à 15% du poids de l'élastomère, en opérant en masse ou dans un milieu solvant ou/et diluant et à des températures comprises entre 40°C et 250°C.

**19.** Procédé selon la revendication 18, **caractérisé en ce qu'**au milieu réactionnel de greffage, on ajoute un initiateur radicalaire générant des radicaux libres aux températures, comprises entre 40°C et 250°C, choisies pour le greffage, lequel initiateur radicalaire est notamment un composé peroxydé, notamment un peroxyde de dihydrocarbyle comme le peroxyde de lauroyle, le peroxyde de benzoyle, le peroxyde de dicumyle ou le peroxyde de ditertiobutyle.

**20.** Procédé selon la revendication 19, **caractérisé en ce que** la quantité d'initiateur radicalaire représente jusqu'à 15%, plus spécialement 0,01% à 6% et plus particulièrement 0,05% à 3% en poids de l'élastomère.

**21.** Procédé selon l'une des revendications 18 à 20, **caractérisé en ce que** le milieu réactionnel de greffage renferme en outre, en poids de l'élastomère, 0,1% à 3.5% et plus spécialement 0,1% à 2,5% d'un ou plusieurs antioxydants.

**22.** Procédé selon la revendication 21, **caractérisé en ce que**,à titre d'antioxydant, ledit milieu réactionnel renferme, en poids de l'élastomère, 0,1% à 1,5% et de préférence 0,1% à 1% d'un phénol bloqué et 0% à 2% et de préférence 0% à 1,5% d'un triphosphite de dialkylphényle.

**23.** Procédé selon la revendication 22, **caractérisé en ce que** le milieu réactionnel de greffage renferme à la fois un phénol bloqué et un triphosphite de dialkylphényle, la quantité pondérale de triphosphite étant de préférence au moins égale et plus spécialement supérieure à celle du phénol bloqué.

**24.** Procédé selon la revendication 16 ou l'une des revendications 17 à 23, **caractérisé en ce que** le produit de réaction constituant la composition bitume/élastomère fonctionnalisé ou le produit résultant de l'incorporation de l'élastomère fonctionnalisé au bitume ou mélange de bitumes est additionné, en opérant sous agitation à des températures comprises entre 100 °C et 230 °C, plus particulièrement entre 120 °C et 190 °C, d'un ou plusieurs additifs susceptibles de réagir avec les groupements fonctionnels carboxyliques ou esters carboxyliques portés par l'élastomère et éventuellement par le bitume, lesdits additifs réactifs étant en particulier des amines, notamment polyamines, primaires ou secondaires, des alcools, notamment polyols, des aminoalcools, des époxydes ou encore des composés métalliques, notamment composés de métaux des groupes I, II, III ou VIII du Tableau Périodique des Eléments.

**25.** Procédé selon la revendication 24, **caractérisé en ce que** la quantité d'additif réactif ou d'additifs réactifs, incorporée audit produit représente 0,01 % à 10 % et plus particulièrement 0,05 % à 5 % du poids de bitume contenu dans ce produit.

**26.** Procédé selon l'une des revendications 1 à 25, **caractérisé en ce que** le milieu réactionnel formé en mettant en contact le bitume ou mélange de bitumes, l'élastomère, l'agent de fonctionnalisation et, s'il est utilisé, le composé peroxydé ou le produit de réaction résultant de ladite mise en contact ou encore le produit résultant de l'incorporation de l'élastomère fonctionnalisé au bitume ou mélange de bitumes est additionné, en opérant sous agitation à des températures comprises entre 100 °C et 230 °C et plus particulièrement entre 120 °C et 190 °C, de 1 % à 40 % et plus spécialement de 2 % à 30 %, en poids du bitume, d'un agent fluxant, ledit agent fluxant étant en particulier une huile hydrocarbonée présentant un intervalle de distillation à pression atmosphérique, déterminé selon la norme ASTM D 86-67, compris entre 100°C et 600°C et situé plus spécialement entre 150°C et 400°C.

**27.** Procédé selon la revendication 26, **caractérisé en ce que** l'élastomère, l'agent de fonctionnalisation et éventuellement, s'il est utilisé, le composé peroxydé ou bien l'élastomère fonctionnalisé sont incorporés au bitume ou mélange de bitumes sous la forme d'une solution mère de ces produits dans l'huile hydrocarbonée en particulier choisie pour constituer l'agent fluxant.

**28.** Procédé selon la revendication 27, **caractérisé en ce que** l'on mélange la solution mère, renfermant soit (i) l'élastomère, l'agent de fonctionnalisation et, s'il est utilisé, le composé peroxydé ou bien (ii) l'élastomère fonctionnalisé, avec le bitume ou mélange de bitumes, en opérant à des températures comprises entre 100°C et 230°C, plus particulièrement entre 120°C et 190°C, et sous agitation, puis on maintient le mélange résultant sous agitation à des températures comprises entre 100°C et 230°C, plus particulièrement entre 120°C et 190°C, pendant une durée au moins égale à 10 minutes et généralement allant de 10 minutes à 90 minutes, pour former un produit constituant la composition bitume/élastomère fonctionnalisé.

**29.** Application des compositions bitume/élastomère fonctionnalisé obtenues par le procédé selon l'une des revendications 1 à 28, à la production de liants bitume/élastomère fonctionnalisé, lesdits liants consistant en lesdites compositions utilisées telles quelles ou bien étant formés par dilution des dites compositions bitume/élastomère fonctionnalisé par un bitume ou mélange de bitumes ou bien par une autre composition bitume/élastomère fonctionnalisé selon l'une des revendications 1 à 28 ayant des caractéristiques différentes, lesquels liants bitume/élastomère fonctionnalisé sont notamment utilisables, directement ou après mise en émulsion aqueuse, à la réalisation de revêtements routiers du type enduit superficiel, à la production d'enrobés mis en place à chaud ou à froid, ou encore à la réalisation de revêtements d'étanchéité.

**30.** Solution mère, utilisable notamment pour la préparation de compositions bitume/élastomère fonctionnalisé, comprenant une huile hydrocarbonée, qui présente un intervalle de distillation à pression atmosphérique, déterminé selon la norme ASTM D 86-67, compris entre 100°C et 600°C et plus particulièrement entre 150°C et 400°C et, en solution dans l'huile hydrocarbonée soit (i) un élastomère, un agent de fonctionnalisation et éventuellement un composé peroxydé ou bien (ii) un élastomère fonctionnalisé résultant du greffage de l'agent de fonctionnalisation sur l'élastomère, **caractérisée en ce que** l'agent de fonctionnalisation consiste en au moins un composé, choisi dans le groupe constitué de :

(i) les polythiolesters carboxyliques A répondant à la formule

$$R\text{-}[OOC\text{-}\underset{\underset{(SH)_t}{|}}{R_1}\text{-}SH]_y \;,$$

(ii) les polythioéthers B résultant de la réaction d'au moins un polythiolester A avec le sulfure d'éthylène et renfermant, en moyenne, 0,1 à 20 et plus particulièrement 0,4 à 12 motifs ($SCH_2\,CH_2$) par molécule A et
(iii) les polythioéthers E résultant de la réaction d'au moins un composé thiol D de formule

$$HS\ -\ \underset{\underset{(SH)_t}{|}}{R_2}\ -\ (COOX)_x$$

avec le sulfure d'éthylène et renfermant, en moyenne, 0,1 à 20 et plus particulièrement 0,4 à 12 motifs ($SCH_2CH_2$) par molécule D, avec dans ces formules, R désignant un radical y-valent hydrocarboné, éventuellement oxygéné, ayant une masse moléculaire au moins égale à 28 et pouvant aller jusqu'à 20000 et plus particulièrement jusqu'à 12000, $R_1$ représente un radical hydrocarboné (t+2)-valent en $C_1$ à $C_{30}$, $R_2$ représente un radical hydrocarboné (x+t+1)-valent en $C_1$ à $C_{30}$, X désigne un atome d'hydrogène ou un radical hydrocarboné, monovalent $R_5$ en $C_1$ à $C_{12}$, t représente zéro ou un, y est un nombre entier allant de 2 à 10 et x désigne un nombre entier ayant une valeur allant de 1 à 3 avec $x+t \leq 3$.

**31.** Solution mère selon la revendication 30, **caractérisée en ce que** l'agent de fonctionnalisation consiste en au moins un composé choisi parmi :

(a) les polythiolesters carboxyliques $A_1$ répondant à la formule

$$R\text{-}[OOC\text{-}R_3\text{-}SH]_y \;,$$

(b) les polythioéthers $B_1$ résultant de la réaction d'au moins un polythiolester $A_1$ avec le sulfure d'éthylène et renfermant, en moyenne, 0,1 à 20 et plus particulièrement 0,4 à 12 motifs ($SCH_2\,CH_2$) par molécule $A_1$ et

(c) les polythioéthers $E_1$ résultant de la réaction d'au moins un composé thiol $D_1$ de formule

$$HS - R_4 - (COOX)_x$$

avec le sulfure d'éthylène et renfermant, en moyenne, 0,1 à 20 et plus particulièrement 0,4 à 12 motifs ($SCH_2CH_2$) par molécule $D_1$, avec dans ces formules $R_3$ représentant un radical hydrocarboné divalent en $C_1$ à $C_{12}$ et plus spécialement en $C_1$ à $C_8$, $R_4$ désignant un radical hydrocarboné (x+1)-valent en $C_1$ à $C_{12}$ et plus particulièrement en $C_1$ à $C_8$ et R, X, y et x ayant les significations données dans la revendication 1.

**32.** Solution mère selon la revendication 30 ou 31, **caractérisée en ce que** dans la formule des polythiolesters carboxyliques A ou $A_1$, y est un nombre entier allant de 2 à 6 et tout particulièrement de 2 à 4 et **en ce que** dans la formule des composés thiols D ou $D_1$, x est égal à 1 ou 2.

**33.** Solution mère selon l'une des revendications 30 à 32, **caractérisée en ce que** les radicaux hydrocarbonés (t+2)-valents $R_1$, (x+t+1)-valents $R_2$, divalents $R_3$, (x+1)-valents $R_4$ et monovalent $R_5$ sont des radicaux aliphatiques saturés, linéaires ou ramifiés, en $C_1$ à $C_{12}$, plus particulièrement en $C_1$ à $C_8$ et tout spécialement en $C_1$ à $C_6$, des radicaux aliphatiques insaturés, linéaires ou ramifiés, en $C_2$ à $C_{12}$, plus particulièrement en en $C_2$ à $C_8$ et tout spécialement en $C_2$ à $C_6$, des radicaux cycloaliphatiques en $C_4$ à $C_{12}$, plus particulièrement en $C_6$ à $C_8$ ou des radicaux aromatiques en $C_6$ à $C_{12}$, plus particulièrement en $C_6$ à $C_8$.

**34.** Solution mère selon l'une des revendications 30 à 33, **caractérisée en ce que**, dans la formule de l'agent de fonctionnalisation, les radicaux x-valents R consistent en radicaux aliphatiques saturés ou insaturés, linéaires ou ramifiés en $C_2$ à $C_{30}$, plus particulièrement en $C_2$ à $C_{12}$ et notamment en $C_2$ à $C_8$, en radicaux cycloaliphatiques en $C_4$ à $C_{12}$ et de préférence en $C_6$ à $C_8$ ou encore en radicaux aromatiques en $C_6$ à $C_{12}$ et de préférence en $C_6$ à $C_8$.

**35.** Solution mère selon l'une des revendications 30 à 33, **caractérisée en ce que**, dans la formule de l'agent de fonctionnalisation, les radicaux x-valents R sont des radicaux hydrocarbonés divalents polyoléfiniques de formule $-[P]_n-$, dans laquelle P représente un motif issu de la polymérisation d'un ou plusieurs monomères oléfiniques en $C_2$ à $C_4$, notamment éthylène, propylène, butène ou encore butadiène, et n désigne le nombre de motifs récurrents formant la chaîne du radical, ledit nombre n étant tel que le radical ait une masse moléculaire comprise entre 160 et 20000 et plus particulièrement entre 160 et 12000.

**36.** Solution mère selon l'une des revendications 30 à 33, **caractérisée en ce que**, dans la formule de l'agent de fonctionnalisation, les radicaux x-valent R consistent en radicaux divalents oxyalkylènes ou polyoxyalkylènes de formule $-[C_hH_{2h}O]_m-C_hH_{2h}-$, dans laquelle h désigne un nombre entier allant de 2 à 4 et m représente le nombre de motifs récurrents ,identiques ou différents, formant la chaîne du radical, ledit nombre m étant tel que le radical ait une masse moléculaire comprise entre 70 et 20000 et plus particulièrement entre 70 et 12000, lesdits radicaux étant en particulier des radicaux choisis parmi les radicaux oxyéthylène, polyoxyéthylènes, oxypropylène, polyoxypropylènes, oxytétraméthylène et polyoxytétraméthylènes.

**37.** Solution mère selon l'une des revendications 30 à 36, **caractérisée en ce que** l'élastomère est choisi parmi les copolymères statistiques ou séquencés de styrène et d'un diène conjugué, notamment isoprène, chloroprène, butadiène, butadiène carboxylé et isoprène carboxylé, lesdits copolymères ayant en particulier une teneur en styrène allant de 5 % à 50 % en poids.

**38.** Solution mère selon la revendication 37, **caractérisée en ce que** la masse moléculaire moyenne en poids des copolymères de styrène et de diène conjugué est comprise entre 10 000 et 600 000 daltons et de préférence entre 30 000 et 400 000 daltons.

**39.** Solution mère selon l'une des revendications 30 à 38, **caractérisée en ce que** l'huile hydrocarbonée est choisie parmi les coupes pétrolières de caractère aromatique, les coupes pétrolières de caractère naphténo-aromatique, les coupes pétrolières de caractère naphténo-paraffinique, les coupes pétrolières de caractère paraffinique, les huiles de houille et les huiles d'origine végétale.

**40.** Solution mère selon l'une des revendications 30 à 39, **caractérisée en ce qu'**elle renferme, en poids de l'huile hydrocarbonée, entre 5 % et 40 % d'élastomère, entre 0,05 % et 10 % d'agent de fonctionnalisation et, en poids de l'élastomère, 0 % à 15 % du composé peroxydé et plus particulièrement entre 10 % et 30 % d'élastomère, entre

0,1 % et 8 % d'agent de fonctionnalisation et, en poids de l'élastomère, 0 % à 10 % du composé peroxydé.

**41.** Solution mère selon l'une des revendications 30 à 39, **caractérisée en ce qu'**elle renferme, en poids de l'huile hydrocarbonée, entre 5 % et 50 % et plus particulièrement entre 10% et 38% d'élastomère fonctionnalisé.

**Patentansprüche**

**1.** Verfahren zur Herstellung funktionalisierter Elastomer/Bitumen-Zusammensetzungen mit einem breiten Plastizitätsbereich, **dadurch gekennzeichnet, dass** ein Bitumen oder eine Bitumenmischung in Kontakt gebracht wird mit, bezogen auf das Gewicht des Bitumen, zwischen 0,5 % und 25 % eines Elastomers und zwischen 0,01 % und 6 % eines Funktionalisierungsagens, wobei der Vorgang bei Temperaturen zwischen 100°C und 230°C unter Rühren für eine Dauer von zumindest 10 Minuten durchgeführt wird, wobei das Funktionalisierungsagens zumindest eine Verbindung aus der Gruppe enthält, die umfasst:

(i) Poly(thiolcarbonsäureester) A der Formel

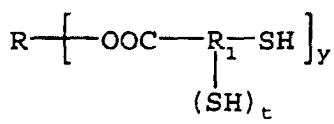

(ii) Polythioether B, erhalten aus der Reaktion mindestens eines Polythioesters A mit Ethylensulfid, welche im Mittel 0,1 bis 20, bevorzugt 0,4 bis 12 ($SCH_2CH_2$) -Einheiten pro Molekül A enthalten, und

(iii) Polythioether E, erhalten durch Reaktion zumindest einer Thiolverbindung D der Formel

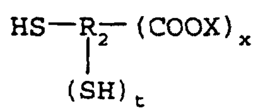

mit Ethylensulfid, welche im Mittel 0,1 bis 20, bevorzugt 0,4 bis 12 ($SCH_2CH_2$)-Einheiten pro Molekül D enthalten, wobei in diesen Formeln R einen y-wertigen Kohlenwasserstoffrest bedeutet, welcher ggf. Sauerstoff enthalten kann, der ein Molekülgewicht von zumindest 28 und bis zu 20.000, bevorzugt bis zu 12.000 aufweisen kann, $R_1$ für einen (t+2)-wertigen $C_1$ bis $C_{30}$-Kohlenwasserstoffrest steht, $R_2$ für einen (x+t+1)-wertigen $C_1$ bis $C_{30}$-Kohlenwasserstoffrest steht, X ein Wasserstoffatom oder einen einwertigen $C_1$ bis $C_{12}$-Kohlenwasserstoffrest $R_5$ bedeutet, t null oder eins bedeutet, y eine ganze Zahl zwischen 2 und 10 bedeutet und x eine ganze Zahl mit einem Wert zwischen 1 und 3 bedeutet, wobei gilt $x+t \leq 3$.

**2.** Verfahren nach Anspruch 1, **dadurch gekennzeichnet, dass** das Funktionalisierungsagens zumindest eine Verbindung enthält, die ausgewählt ist aus der Gruppe, die umfasst:

(a) Poly(thiolcarbonsäureester) $A_1$ der Formel

$$R\text{-}[OOC\text{-}R_3\text{-}SH]_y$$

(b) Polythioether $B_1$, erhalten aus der Reaktion zumindest eines Polythiolesters $A_1$ mit Ethylensulfid, welche im Mittel 0,1 bis 20, bevorzugt 0,4 bis 12 ($SCH_2CH_2$)-Einheiten pro Molekül A enthalten, und

(c) Polythioether $E_1$, erhalten durch Reaktion zumindest einer Thiolverbindung $D_1$ der Formel

$$HS\text{-}R_4\text{-}(COOX)_x$$

mit Ethylensulfid, welche im Mittel 0,1 bis 20, bevorzugt 0,4 bis 12 ($SCH_2CH_2$)-Einheiten pro Molekül $D_1$ enthalten, wobei in diesen Formeln $R_3$ einen zweiwertigen $C_1$ bis $C_{12}$-, bevorzugt $C_1$ bis $C_8$-Kohlenwasserstoffrest bezeichnet, $R_4$ einen (x+1)-wertigen $C_1$ bis $C_{12}$-, bevorzugt $C_1$ bis $C_8$-Kohlenwasserstoffrest bezeichnet und R, X, y und x die in Anspruch 1 angegebene Bedeutung aufweisen.

3. Verfahren nach Anspruch 1 oder 2, **dadurch gekennzeichnet, dass** in der Formel der Poly(thiolcarbonsäureester) A oder $A_1$ y eine ganze Zahl zwischen 2 und 6, bevorzugt 2 und 4 ist und dass in der Formel der Thiolverbindungen D oder $D_1$ x 1 oder 2 bedeutet.

4. Verfahren nach einem der Ansprüche 1 bis 3, **dadurch gekennzeichnet, dass** die (t+2)-wertigen, (x+t+1)-wertigen, zweiwertigen, (x+1)-wertigen und einwertigen Kohlenwasserstoffreste $R_1$, $R_2$, $R_3$, $R_4$, und $R_5$ gesättigte aliphatische Reste sind, welche linear oder verzweigt sein können und $C_1$ bis $C_{12}$, bevorzugt $C_1$ bis $C_8$, insbesondere bevorzugt $C_1$ bis $C_6$ umfassen, ungesättigte aliphatische Reste, welche linear oder verzweigt sein können und $C_2$ bis $C_{12}$, bevorzugt $C_2$ bis $C_8$, insbesondere bevorzugt $C_2$ bis $C_6$, umfassen, cycloaliphatische Reste mit $C_4$ bis $C_{12}$, insbesondere bevorzugt $C_6$ bis $C_8$ umfassen, bzw. aromatische Reste mit $C_6$ bis $C_{12}$, bevorzugt $C_6$ bis $C_8$ umfassen.

5. Verfahren nach einem der Ansprüche 1 bis 4, **dadurch gekennzeichnet, dass** in der Formel des Funktionalisierungsagens die x-wertigen Reste R ausgewählt sind aus gesättigten oder ungesättigten aliphatischen Gruppen, welche linear oder verzweigt sein können und $C_2$ bis $C_{30}$, bevorzugt $C_2$ bis $C_{12}$, insbesondere bevorzugt $C_2$ bis $C_8$ umfassen, cycloaliphatischen Gruppen, welche $C_4$ bis $C_{12}$, bevorzugt $C_6$ bis $C_8$ umfassen, oder aromatischen Gruppen, welche $C_6$ bis $C_{12}$, bevorzugt $C_6$ bis $C_8$ umfassen.

6. Verfahren nach einem der Ansprüche 1 bis 4, **dadurch gekennzeichnet, dass** in der Formel des Funktionalisierungsagens die x-wertigen Reste R zweiwertige polyolefinische Kohlenwasserstoffreste der Formel $-[P]_n-$ sind, wobei P eine Einheit bedeutet, die aus der Polymerisation eines oder mehrerer olefinischer $C_2$- bis $C_4$-Monomeren erhalten wird, welche insbesondere Ethylen, Propylen, Buten oder Butadien umfassen, und n die Anzahl der Wiederholungseinheiten bedeutet, welche die Kette des Restes bilden, wobei diese Zahl so gewählt ist, dass der Rest ein Molekülgewicht zwischen 160 und 20.000, bevorzugt 160 bis 12.000 aufweist.

7. Verfahren nach einem der Ansprüche 1 bis 4, **dadurch gekennzeichnet, dass** in der Formel des Funktionalisierungsagens die x-wertigen Reste R ausgewählt sind aus zweiwertigen Oxyalkylen- oder Polyoxyalkylenresten der Formel $-[C_hH_{2h}O]_m-C_hH_{2h}-$, wobei h eine ganze Zahl zwischen 2 und 4 bedeutet, und m die Anzahl der Wiederholungseinheiten bezeichnet, die, gleich oder verschieden, die Kette des Restes bilden, wobei die Zahl m so gewählt ist, dass der Rest ein Molekülgewicht zwischen 70 und 20.000, bevorzugt zwischen 70 und 12.000 aufweist, wobei die Reste insbesondere ausgewählt sind aus der Gruppe, die gebildet ist aus Oxyethylen-, Polyoxyethylen-, Oxypropylen-, Polyoxypropylen-, Oxytetramethylen- und Polyoxytetramethylenresten.

8. Verfahren nach einem der Ansprüche 1 bis 7, **dadurch gekennzeichnet, dass** das Funktionalisierungsagens in einer Menge von 0,05 % bis 3 % bezogen auf das Gewicht des Bitumen zugesetzt wird.

9. Verfahren nach einem der Ansprüche 1 bis 8, **dadurch gekennzeichnet, dass** die Menge des Elastomers zwischen 1 % und 15 % des Gewichts des Bitumen entspricht.

10. Verfahren nach einem der Ansprüche 1 bis 9, **dadurch gekennzeichnet, dass** das Bitumen oder die Bitumenmischung aus Bitumen ausgewählt ist, die eine kinematische Viskosität bei 100°C zwischen 0, 5 x $10^{-4}$ $m^2/s$ und 3 x $10^{-2}$ $m^2/s$, bevorzugt zwischen 1 x $10^{-4}$ $m^2/s$ und 2 x $10^{-2}$ $m^2/s$ aufweisen.

11. Verfahren nach Anspruch 10, **dadurch gekennzeichnet, dass** das Bitumen oder die Bitumenmischung bei 25°C eine Durchlässigkeit nach Definition durch den Standard NF T 66004 zwischen 5 und 900, bevorzugt zwischen 10 und 400 aufweist.

12. Verfahren nach einem der Ansprüche 1 bis 11, **dadurch gekennzeichnet, dass** das Elastomer ausgewählt ist aus statistischen oder Blockcopolymeren von Styrol und einem konjugierten Dien, wobei das Dien insbesondere ausgewählt ist aus der Gruppe von Butadien, Isopren, Chloropren, carboxyliertem Butadien und carboxyliertem

Isopren.

**13.** Verfahren nach Anspruch 12, **dadurch gekennzeichnet, dass** das Copolymer aus Styrol und dem konjugierten Dien 5 Gew.-% bis 50 Gew.-% Styrol enthält.

**14.** Verfahren nach Anspruch 12 oder 13, **dadurch gekennzeichnet, dass** das gewichtsgemittelte Molekülgewicht des Copolymers aus Styrol und dem konjugierten Dien zwischen 10.000 und 600.000 Dalton, bevorzugt zwischen 30.000 bis 400.000 Dalton beträgt.

**15.** Verfahren nach einem der Ansprüche 1 bis 14, **dadurch gekennzeichnet, dass** eine Peroxidverbindung, insbesondere eine Dikohlenwasserstoffperoxidverbindung, die bei Temperaturen zwischen 100°C und 230°C freie Radikale erzeugt, zur Reaktionsmischung gegeben wird, die aus dem Bitumen oder der Bitumenmischung, dem Elastomer und dem Funktionalisierungsagens hergestellt ist, wobei die Peroxidverbindung bezogen auf das Gewicht des Elastomers bevorzugt in einer Menge von bis zu 15 % zugegeben wird.

**16.** Verfahren nach einem der Ansprüche 1 bis 15, **dadurch gekennzeichnet, dass** das Bitumen oder die Bitumenmischung mit dem Elastomer, dem Funktionalisierungsagens und ggf. der Peroxidverbindung in Kontakt gebracht wird, wobei zuerst das Elastomer in das Bitumen oder die Bitumenmischung eingebracht wird, wobei dieser Vorgang unter Rühren bei einer Temperatur zwischen 100°C und 230°C, bevorzugt zwischen 120°C und 190°C während einer Dauer von wenigen zehn Minuten bis wenigen Stunden, bevorzugt zwischen 30 Minuten und 8 Stunden durchgeführt wird, um eine homogene Mischung aus Bitumen und dem Elastomer zu erhalten, und dann das Funktionalisierungsagens, ggf. gefolgt von der Peroxidverbindung, in geeigneten Portionen während einer Dauer von zumindest 10 Minuten, bevorzugt zwischen 10 Minuten und 5 Stunden, insbesondere bevorzugt zwischen 30 Minuten und 180 Minuten in diese Mischung gegeben wird, wobei die gesamte Mischung unter Rühren bei Temperaturen zwischen 100°C und 230°C, bevorzugt zwischen 120°C und 190°C gehalten wird, die gleich oder verschieden zu der Temperatur für die Zugabe des Elastomers zu dem Bitumen oder der Bitumenmischung gewählt sein können, um ein Reaktionsprodukt zu erhalten, das die funktionalisierte Elastomer/Bitumenzusammensetzung darstellt.

**17.** Verfahren nach einem der Ansprüche 1 bis 14, **dadurch gekennzeichnet, dass** in einer ersten Stufe ein funktionalisiertes Elastomer hergestellt wird, indem das Funktionalisierungsagens auf das gewählte Elastomer gepfropft wird und dann das erhaltene funktionalisierte Elastomer in das Bitumen oder die Bitumenmischung gegeben wird, wobei die Zugabe unmittelbar nach Erhalt des funktionalisierten Elastomers oder auch nach einer längeren Lagerzeit des funktionalisierten Elastomers erfolgt.

**18.** Verfahren nach Anspruch 17, **dadurch gekennzeichnet, dass** die Herstellung des funktionalisierten Elastomers durch Pfropfen durchgeführt wird, indem das gewählte Elastomer mit einer Menge des Funktionalisierungsagens in Kontakt gebracht wird, die 0,2 % bis 25 %, bevorzugt 0,5 % bis 15 % des Gewichts des Elastomers entspricht, wobei die Reaktion in Masse oder in einem Lösungsmittel und/oder in einem Verdünnungsmedium sowie bei Temperaturen zwischen 40°C und 250°C durchgeführt wird.

**19.** Verfahren nach Anspruch 18, **dadurch gekennzeichnet, dass** ein Radikalbildner, der bei den für das Pfropfen gewählten Temperaturen zwischen 40°C und 250°C Radikale erzeugt, der Pfropfreaktionsmischung zugegeben wird, wobei der Radikalbildner bevorzugt eine Peroxidverbindung, insbesondere bevorzugt eine Dikohlenwasserstoffperoxidverbindung ist, die insbesondere ausgewählt ist aus der Gruppe, die gebildet ist aus Lauroylperoxid, Benzoylperoxid, Dicumylperoxid und Di-tert.-butylperoxid.

**20.** Verfahren nach Anspruch 19, **dadurch gekennzeichnet, dass** die Menge des Radikalbildners bis zu 15 %, bevorzugt 0,01 % bis 6 %, insbesondere bevorzugt 0,05 % bis 3 % des Gewichts des Elastomers entspricht.

**21.** Verfahren nach einem der Ansprüche 18 bis 20, **dadurch gekennzeichnet, dass** die Pfropfreaktionsmischung weiter, bezogen auf das Gewicht des Elastomers, 0,1 % bis 3,5 %, bevorzugt 0,1 % bis 2,5 % eines oder mehrerer Antioxidationsmittel enthält.

**22.** Verfahren nach Anspruch 21, **dadurch gekennzeichnet, dass** die Reaktionsmischung als Antioxidationsmittel bezogen auf das Gewicht des Elastomers, 0,1 % bis 1,5 %, bevorzugt 0,1 % bis 1 % eines gehinderten Phenols und 0 % bis 2 %, bevorzugt 0 % bis 1,5 % eines Dialkylphenyltriphosphits enthält.

**23.** Verfahren nach Anspruch 22, **dadurch gekennzeichnet, dass** die Pfropfreaktionsmischung sowohl ein gehindertes Phenol als auch ein Dialkylphenyltriphosphit enthält, wobei, bezogen auf das Gewicht, die Menge des Triphosphits bevorzugt zumindest gleich oder insbesondere bevorzugt größer als die des gehinderten Phenols ist.

**24.** Verfahren nach Anspruch 16 oder einem der Ansprüche 17 bis 23, **dadurch gekennzeichnet, dass** dem Reaktionsprodukt, welches die funktionalisierte Bitumen/Elastomerzusammensetzung darstellt, oder dem Produkt, das durch Zugabe des funktionalisierten Elastomers zum Bitumen oder der Bitumenmischung erhalten wird, ein oder mehrere Additive zugegeben werden, die mit den funktionellen Carboxyl- oder den Carboxyestergruppen des Elastomers und ggf. des Bitumens reagieren können, wobei die Zugabe unter Rühren bei Temperaturen zwischen 100°C und 230°C, bevorzugt 120°C und 190°C durchgeführt wird, und die reaktiven Additive bevorzugt ausgewählt sind aus Aminen, insbesondere Polyamine, primäre oder sekundäre Amine, Alkoholen, insbesondere Polyole, Aminoalkoholen, Epoxiden und Metallverbindungen, insbesondere Verbindungen der Metalle der Gruppen I, II, III oder VIII des periodischen Systems der Elemente.

**25.** Verfahren nach Anspruch 24, **dadurch gekennzeichnet, dass** die Menge des reaktiven Additivs oder der reaktiven Additive, die dem Produkt zugegeben werden, 0,01 % bis 10 %, bevorzugt 0,05 % bis 5 % des in diesem Produkt enthaltenen Bitumens entsprechen.

**26.** Verfahren nach einem der Ansprüche 1 bis 25, **dadurch gekennzeichnet, dass** der Reaktionsmischung, die erhalten wird, indem das Bitumen oder die Bitumenmischung, das Elastomer, das Funktionalisierungsagens und ggf. die Peroxidverbindung in Kontakt gebracht werden, oder dem Reaktionsprodukt, das erhalten wird, indem diese Verbindungen in Kontakt gebracht werden, oder dem Reaktionsprodukt, welches durch die Zugabe des funktionalisierten Elastomers zum Bitumen oder der Bitumenmischung erhalten wird, bezogen auf das Gewicht des Bitumens, ein Fließmittel in einer Menge von 1 % bis 40 %, bevorzugt 2 % bis 30 % zugegeben wird, wobei die Zugabe unter Rühren bei Temperaturen zwischen 100°C und 230°C, bevorzugt zwischen 120°C und 190°C erfolgt, wobei das Fließmittel bevorzugt ein Kohlenwasserstofföl ist, welches bei Atmosphärendruck einen Siedebereich, bestimmt nach ASTM Standard D 86-67, zwischen 100°C und 600°C, bevorzugt 150°C bis 400°C aufweist.

**27.** Verfahren nach Anspruch 26, **dadurch gekennzeichnet, dass** das Elastomer, das Funktionalisierungsagens und ggf. die Peroxidverbindung, oder das funktionalisierte Elastomer, dem Bitumen oder der Bitumenmischung in Form einer Mutterlösung dieser Produkte in dem als Fließmittel ausgewählten Kohlenwasserstofföl zugegeben werden.

**28.** Verfahren nach Anspruch 27, **dadurch gekennzeichnet, dass** die Mutterlösung, welche entweder (i) das Elastomer, das Funktionalisierungsagens und ggf. die Peroxidverbindung, oder (ii) das funktionalisierte Elastomer enthält, mit dem Bitumen oder der Bitumenmischung vermischt wird, wobei dieser Vorgang unter Rühren bei Temperaturen zwischen 100°C und 230°C, bevorzugt zwischen 120°C und 190°C, durchgeführt wird, und die erhaltene Mischung anschließend unter Rühren während einer Dauer von mindestens 10 Minuten, bevorzugt während 10 Minuten bis 90 Minuten bei Temperaturen zwischen 100°C und 230°C, bevorzugt zwischen 120°C und 190°C gehalten wird, um ein Produkt zu erhalten, welches der funktionalisierten Elastomer/Bitumenzusammensetzung entspricht.

**29.** Verwendung von funktionalisierten Bitumen/Elastomer-Zusammensetzungen, erhalten nach einem Verfahren gemäß einem der Ansprüche 1 bis 28 für die Herstellung von funktionalisierten Bitumen/Elastomer-Bindemitteln, wobei diese Bindemittel aus den Zusammensetzungen selbst bestehen oder hergestellt sind durch Verdünnen dieser funktionalisierten Bitumen/Elastomer-Zusammensetzungen mit Bitumen oder Bitumenmischungen oder mit einer anderen funktionalisierten Bitumen/Elastomer-Zusammensetzung erhalten nach einem der Ansprüche 1 bis 28, welche andere Eigenschaften aufweist, wobei diese funktionalisierten Bitumen/Elastomer-Bindemittel direkt oder nach Überführung in eine wässrige Emulsion insbesondere für die Herstellung von Straßenbelägen in Form von Oberflächenbeschichtungen, für die Herstellung von Bitumenmischungen für die Anwendung an heißen oder kalten Flächen, sowie für die Herstellung wasserdichter Flächen geeignet sind.

**30.** Mutterlösung, welche insbesondere für die Herstellung funktionalisierter Elastomer/Bitumenzusammensetzungen verwendet werden kann, umfassend ein Kohlenwasserstofföl, welches bei Atmosphärendruck einen Siedebereich, bestimmt nach ASTM-Standard D 86-67, zwischen 100°C und 600°C, bevorzugt 150°C und 400°C aufweist, und, gelöst in dem Kohlenwasserstofföl, entweder (i) ein Elastomer, ein Funktionalisierungsagens und ggf. eine Peroxidverbindung, oder (ii) ein funktionalisiertes Elastomer, welches durch Aufpfropfen des Funktionalisierungsagens auf das Elastomer erhalten wird, wobei das Funktionalisierungsagens zumindest eine Verbindung enthält,

die ausgewählt ist aus der Gruppe, die umfasst:

(i) Poly(thiolcarbonsäureester) A der Formel

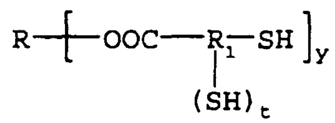

(ii) Polythioether B, erhalten aus der Reaktion mindestens eines Polythiolesters A mit Ethylensulfid, welche im Mittel 0,1 bis 20, bevorzugt 0,4 bis 12 ($SCH_2CH_2$)-Einheiten pro Molekül A enthalten, und

(iii) Polythioether E, erhalten durch Reaktion zumindest einer Thiolverbindung D der Formel

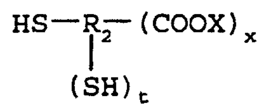

mit Ethylensulfid, welche im Mittel 0,1 bis 20, bevorzugt 0,4 bis 12 ($SCH_2CH_2$)-Einheiten pro Molekül D enthalten, wobei in diesen Formeln R einen y-wertigen Kohlenwasserstoffrest bedeutet, welcher ggf. Sauerstoff enthalten kann, der ein Molekülgewicht von zumindest 28 und bis zu 20.000, bevorzugt bis zu 12.000 aufweisen kann, $R_1$ für einen (t+2)-wertigen $C_1$ bis $C_{30}$-Kohlenwasserstoffrest steht, $R_2$ für einen (x+t+1)-wertigen $C_1$ bis $C_{30}$-Kohlenwasserstoffrest steht, X ein Wasserstoffatom oder einen einwertigen $C_1$ bis $C_{12}$-Kohlenwasserstoffrest $R_5$ bedeutet, t null oder eins bedeutet, y eine ganze Zahl zwischen 2 und 10 bedeutet und x eine ganze Zahl mit einem Wert zwischen 1 und 3 bedeutet, wobei gilt $x+t \leq 3$.

**31.** Mutterlösung nach Anspruch 30, **dadurch gekennzeichnet, dass** das Funktionalisierungsagens aus zumindest einer Verbindung zusammengesetzt ist, die ausgewählt ist aus der Gruppe, die umfasst:

(a) Poly(thiolcarbonsäureester) $A_1$ der Formel

$$R\text{-}[OOC\text{-}R_3\text{-}SH]_y$$

(b) Polythioether $B_1$, erhalten aus der Reaktion zumindest eines Polythiolesters $A_1$ mit Ethylensulfid, welche im Mittel 0,1 bis 20, bevorzugt 0,4 bis 12 ($SCH_2CH_2$)-Einheiten pro Molekül A enthalten, und

(c) Polythioether $E_1$, erhalten durch Reaktion zumindest einer Thiolverbindung $D_1$ der Formel

$$HS\text{-}R_4\text{-}(COOX)_x$$

mit Ethylensulfid, welche im Mittel 0,1 bis 20, bevorzugt 0,4 bis 12 ($SCH_2CH_2$)-Einheiten pro Molekül $D_1$ enthalten, wobei in diesen Formeln $R_3$ einen zweiwertigen Kohlenwasserstoffrest mit $C_1$ bis $C_{12}$, bevorzugt $C_1$ bis $C_8$ bedeutet, $R_4$ einen (x+1)-wertigen Kohlenwasserstoffrest mit $C_1$ bis $C_{12}$, bevorzugt $C_1$ bis $C_8$ bezeichnet und R, X, y und x die in Anspruch 1 angegebene Bedeutung aufweisen.

**32.** Mutterlösung nach Anspruch 30 oder 31, **dadurch gekennzeichnet, dass** in der Formel der Poly(thiolcarbonsäureester) A oder $A_1$ y eine ganze Zahl zwischen 2 und 6, bevorzugt 2 und 4 ist, und dass in der Formel der Thiolverbindungen D oder $D_1$ x 1 oder 2 bedeutet.

**33.** Mutterlösung nach einem der Ansprüche 30 bis 32, **dadurch gekennzeichnet, dass** der (t+2)-wertige, der (x+t+1)-wertige, der zweiwertige, der (x+1)-wertige und der einwertige Kohlenwasserstoffrest $R_1$, $R_2$, $R_3$, $R_4$, bzw. $R_5$ ein gesättigter aliphatischer Rest sein kann, welcher linear oder verzweigt sein kann und $C_1$ bis $C_{12}$, bevorzugt $C_1$ bis $C_8$, insbesondere bevorzugt $C_1$ bis $C_6$ umfasst, ein ungesättigter aliphatischer Rest, welcher linear oder verzweigt sein kann und $C_2$ bis $C_{12}$, bevorzugt $C_2$ bis $C_8$, insbesondere bevorzugt $C_2$ bis $C_6$ umfasst, ein cycloaliphatischer Rest, welcher $C_4$ bis $C_{12}$, bevorzugt $C_6$ bis $C_8$ umfasst oder ein aromatischer Rest, welcher $C_6$ bis $C_{12}$, bevorzugt $C_6$ bis $C_8$ umfasst.

**34.** Mutterlösung nach einem der Ansprüche 30 bis 33, **dadurch gekennzeichnet, dass** in der Formel des Funktionalisierungsagens die x-wertigen Reste R ausgewählt sind aus gesättigten oder ungesättigten, linearen oder verzweigten aliphatischen Gruppen, welche $C_2$ bis $C_{30}$, bevorzugt $C_2$ bis $C_{12}$, und insbesondere bevorzugt $C_2$ bis $C_8$ umfassen, cycloaliphatischen Gruppen, welche $C_4$ bis $C_{12}$, bevorzugt $C_6$ bis $C_8$ umfassen, oder aromatischen Gruppen, welche $C_6$ bis $C_{12}$, bevorzugt $C_6$ bis $C_8$ umfassen.

**35.** Mutterlösung nach einem der Ansprüche 30 bis 33, **dadurch gekennzeichnet, dass** in der Formel des Funktionalisierungsagens die x-wertigen Reste R zweiwertige polyolefinische Kohlenwasserstoffreste der Formel $-[P]_n-$ sind, wobei P eine Einheit bedeutet, die aus der Polymerisation eines oder mehrerer olefinischer $C_2$ bis $C_4$-Monomeren, insbesondere Ethylen, Propylen, Buten oder Butadien erhalten wird, und n die Anzahl der Wiederholungseinheiten bedeutet, welche die Kette des Restes bilden, wobei diese Zahl n so gewählt ist, dass der Rest ein Molekülgewicht zwischen 160 und 20.000, bevorzugt zwischen 160 und 12.000 aufweist.

**36.** Mutterlösung nach einem der Ansprüche 30 bis 33, **dadurch gekennzeichnet, dass** in der Formel des Funktionalisierungsagens die x-wertigen Reste R ausgewählt sind aus zweiwertigen Oxyalkylen- oder Polyoxyalkylenresten der Formel $-[C_hH_{2h}O]_m-C_hH_{2h}-$, wobei h eine ganze Zahl zwischen 2 und 4 bedeutet, und m die Anzahl der Wiederholungseinheiten bezeichnet, die, gleich oder verschieden, die Kette des Restes bilden, wobei die Zahl m so gewählt ist, dass der Rest ein Molekülgewicht 70 und 20.000, bevorzugt 70 und 12.000 aufweist, wobei die Reste insbesondere ausgewählt sind aus der Gruppe, die gebildet ist aus Oxyethylen-, Polyoxyethylen-, Oxypropylen-, Polyoxypropylen-, Oxytetramethylen- und Polyoxytetramethylenresten.

**37.** Mutterlösung nach einem der Ansprüche 30 bis 36, **dadurch gekennzeichnet, dass** das Elastomer ausgewählt ist aus statistischen oder Blockcopolymeren von Styrol und einem konjugierten Dien, das insbesondere ausgewählt ist aus der Gruppe von Isopren, Chloropren, Butadien, carboxyliertem Butadien und carboxyliertem Isopren, wobei die Copolymere insbesondere einen Styrolanteil zwischen 5 und 50 Gew.-% aufweisen.

**38.** Mutterlösung nach Anspruch 37, **dadurch gekennzeichnet, dass** das gewichtsgemittelte Molekülgewicht des Copolymers aus Styrol und dem konjugierten Dien zwischen 10.000 und 600.000 Dalton, bevorzugt 30.000 und 400.000 Dalton beträgt.

**39.** Mutterlösung nach einem der Ansprüche 30 bis 38, **dadurch gekennzeichnet, dass** das Kohlenwasserstofföl ausgewählt ist aus der Gruppe, die besteht aus aromatischen Petroleumschnitten, naphtheno-aromatischen Petroleumschnitten, naphtheno-paraffinischen Petroleumschnitten, paraffinischen Petroleumschnitten, Kohleölen und pflanzlichen Ölen.

**40.** Mutterlösung nach einem der Ansprüche 30 bis 39, enthaltend, bezogen auf das Gewicht des Kohlenwasserstofföls, zwischen 5 % und 40 % Elastomer, zwischen 0,05 % und 10 % des Funktionalisierungsagens, und, bezogen auf das Gewicht des Elastomers, 0 % bis 15 % der Peroxidverbindung, insbesondere bevorzugt zwischen 10 % und 30 % Elastomer, zwischen 0,1 % und 8 % Funktionalisierungsagens und, bezogen auf das Gewicht des Elastomers, 0 % bis 10 % der Peroxidverbindung.

**41.** Mutterlösung nach einem der Ansprüche 30 bis 39, enthaltend, bezogen auf das Gewicht des Kohlenwasserstofföls, zwischen 5 % und 50 %, bevorzugt 10 % und 38 % des funktionalisierten Elastomers.

## Claims

**1.** A process for preparing bitumen/functionalised elastomer compositions with a wide plasticity range, of the type in which a bitumen or mixture of bitumens is brought into contact, at temperatures of between 100°C and 230°C and with stirring, for a period of at least ten minutes, with, by weight of bitumen, between 0.5 % and 25 % of an elastomer and between 0.01 % and 6 % of a functionalising agent, said process being **characterised in that** the functionalising agent consists of at least one compound chosen from the group comprising

(i) the carboxylated polythiolesters A complying with the formula

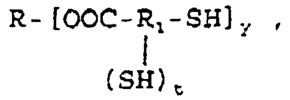

(ii) the polythioethers B arising from the reaction of at least one polythiolester A with ethylene sulphide and containing, on average, 0.1 to 20 and more particularly 0.4 to 12 ($SCH_2$ $CH_2$) moieties per A molecule and
(iii) the polythioethers E arising from the reaction of at least one thiol D compound of the formula

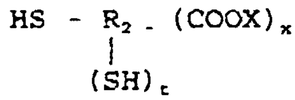

with the ethylene sulphide and containing, on average, 0.1 to 20 and more particularly 0.4 to 12 ($SCH_2CH_2$) moieties per D molecule, wherein in these formulae R denotes a y-valent hydrocarbon radical, optionally oxygenated, having a molecular mass at least equal to 28 and which may be as high as 20000 and more particularly up to 12000, $R_1$ represents a $C_1$ to $C_{30}$ (t+2) -valent hydrocarbon radical, $R_2$ represents a $C_1$ to $C_{30}$ (x+t+l)-valent hydrocarbon radical, x denotes a hydrogen atom or a $C_1$ to $C_{12}$ monovalent $R_5$ hydrocarbon radical, t represents zero or one, y is a whole number ranging from 2 to 10 and x denotes a whole number having a value ranging from 1 to 3 with $x+t \leq 3$.

**2.** A process according to claim 1, **characterised in that** the functionalising agent consists of at least one compound chosen from:

(a) the carboxylated polythiolesters $A_1$ complying with the formula

$$R\text{-}[OOC\text{-}R_3\text{-}SH]_y ,$$

(b) the polythioethers $B_1$ arising from the reaction of at least one polythiolester $A_1$ with ethylene sulphide and containing, on average, 0.1 to 20 and more particularly 0.4 to 12 ($SCH_2$ $CH_2$) moieties per $A_1$ molecule and
(c) the polythioethers $E_1$ arising from the reaction of at least one thiol $D_1$ compound of the formula

$$HS - R_4 - (COOX)_x$$

with the ethylene sulphide and containing, on average, 0.1 to 20 and more particularly 0.4 to 12 ($SCH_2CH_2$) moieties per $D_1$ molecule, wherein in these formulae $R_3$ represents a $C_1$ to $C_{12}$, and more particularly $C_1$ to $C_8$, divalent hydrocarbon radical, $R_4$ denoting a $C_1$ to $C_{12}$, and more particularly $C_1$ to $C_8$, (x+1)-valent hydrocarbon radical, and R, X, y and x having the meanings indicated in claim 1.

**3.** A process according to claim 1 or 2, **characterised in that**, in the formula of the carboxylated polythiolesters A or $A_1$, y is a whole number ranging from 2 to 6 and in particular from 2 to 4, and **in that**, in the formula of the thiol compounds D or $D_1$, x is equal to 1 or 2.

**4.** A process according to any one of claims 1 to 3, **characterised in that** the (t+2)-valent $R_1$, (x+t+l) -valent $R_2$, divalent $R_3$, (x+1)-valent $R_4$ and monovalent $R_5$ hydrocarbon radicals are $C_1$ to $C_{12}$, more particularly $C_1$ to $C_8$ and especially $C_1$ to $C_6$, saturated, linear or branched aliphatic radicals, $C_2$ to $C_{12}$, more particularly $C_2$ to $C_8$ and especially $C_2$ to $C_6$, unsaturated, linear or branched aliphatic radicals, $C_4$ to $C_{12}$, more particularly $C_6$ to $C_8$ cycloaliphatic radicals, or $C_6$ to $C_{12}$, more particularly $C_6$ to $C_8$ aromatic radicals.

**5.** A process according to any one of claims 1 to 4, **characterised in that**, in the formula of the functionalising agent, the x-valent radicals R consist of $C_2$ to $C_{30}$, more particularly $C_2$ to $C_{12}$ and especially $C_2$ to $C_8$, saturated or

unsaturated, linear or branched aliphatic radicals, of $C_4$ to $C_{12}$ and preferably $C_6$ to $C_8$ cycloaliphatic radicals, or else of $C_6$ to $C_{12}$ and preferably $C_6$ to $C_8$ aromatic radicals.

**6.** A process according to any one of claims 1 to 4, **characterised in that**, in the formula of the functionalising agent, the x-valent radicals R are divalent polyolefinic hydrocarbon radicals of the formula $-[P]_n-$, in which P represents a unit arising from the polymerisation of one or more $C_2$ to $C_4$ olefinic monomers, especially ethylene, propylene, butene or else butadiene, and n denotes the number of recurrent units forming the chain of the radical, said number n being such that the radical has a molecular mass of between 160 and 20000 and more particularly between 160 and 12000.

**7.** A process according to any one of claims 1 to 4, **characterised in that**, in the formula of the functionalising agent, the x-valent radicals R consist of divalent oxyalkylene or polyoxyalkylene radicals of the formula $-[C_hH_{2h}O]_m-C_hH_{2h}-$, in which h denotes a whole number ranging from 2 to 4 and m represents the number of recurrent units, identical or different, forming the chain of the radical, said number m being such that the radical has a molecular mass of between 70 and 20000 and more particularly between 70 and 12000, said radicals being in particular radicals chosen from the oxyethylene, polyoxyethylene, oxypropylene, polyoxypropylene, oxytetramethylene and polyoxytetramethylene radicals.

**8.** A process according to any one of claims 1 to 7, **characterised in that** the functionalising agent is used in a quantity of between 0.05 % and 3 % by weight of bitumen.

**9.** A process according to any one of claims 1 to 8, **characterised in that** the quantity of elastomer is between 1 % and 15 % by weight of bitumen.

**10.** A process according to any one of claims 1 to 9, **characterised in that** the bitumen or mixture of bitumens is chosen from the bitumens having a kinematic viscosity at 100°C of between $0.5 \times 10^{-4}$ $m^2/s$ and $3 \times 10^{-2}$ $m^2/s$ and preferably between $1 \times 10^{-4}$ $m^2/s$ and $2 \times 10^{-2}$ $m^2/s$.

**11.** A process according to claim 10, **characterised in that** the bitumen or mixture of bitumens has a penetrability at 25°C, defined according to standard NF T 66004, of between 5 and 900 and preferably between 10 and 400.

**12.** A process according to any one of claims 1 to 11, **characterised in that** the elastomer is chosen from the random or sequential copolymers of styrene and a conjugated diene, said diene in particular being such as butadiene, isoprene, chloroprene, carboxylated butadiene, carboxylated isoprene.

**13.** A process according to claim 12, **characterised in that** the styrene and conjugated diene copolymer contains, by weight, 5 % to 50 % of styrene.

**14.** A process according to claim 12 or 13, **characterised in that** the weight average molecular mass of the styrene and conjugated diene copolymer is between 10,000 and 600,000 daltons and preferably between 30,000 and 400,000 daltons.

**15.** A process according to any one of claims 1 to 14, **characterised in that** a peroxidised compound, especially a dihydrocarbyl peroxide, generating free radicals at temperatures of between 100°C and 230°C, is added to the reaction medium formed of the bitumen or bitumen mixture, the elastomer and the functionalising agent, said peroxidised compound being used in a quantity in particular of up to 15 % by weight of the elastomer.

**16.** A process according to any one of claims 1 to 15, **characterised in that** the bitumen or bitumen mixture is brought into contact with the elastomer, the functionalising agent and, if used, the peroxidised compound by firstly incorporating the elastomer into the bitumen or bitumen mixture, at temperature of between 100°C and 230°C, in particular between 120°C and 190°C, and with stirring, for a period of a few tens of minutes to several hours, in particular 30 minutes to 8 hours, to form a homogeneous mixture of bitumen and elastomer, then by introducing into said mixture the functionalising agent and then, if used, the peroxidised compound in suitable amounts, while continuing to stir the whole at temperatures of between 100°C and 230°C, in particular between 120°C and 190°C, and which may or may not be identical to the temperatures at which the elastomer was incorporated into the bitumen or bitumen mixture, for a period at least equal to 10 minutes and generally ranging from 10 minutes to 5 hours, more particularly from 30 minutes to 180 minutes, to form a reaction product constituting the bitumen/functionalised elastomer composition.

**17.** A process according to any one of claims 1 to 14, **characterised in that**, in a first step, a functionalised elastomer is formed by grafting the functionalising agent on to the chosen elastomer, then the functionalised elastomer obtained is incorporated into the [sic] bitumen or bitumen mixture, said incorporation being carried out immediately after obtaining the functionalised elastomer or after a more or less protracted storage time of said functionalised elastomer.

**18.** A process according to claim 17, **characterised in that** the preparation of the functionalised elastomer by grafting is performed by contacting the chosen elastomer with the functionalising agent used in a quantity representing 0.2 % to 25 %, and more particularly 0.5 % to 15 %, of the weight of the elastomer, while operating in a mass or in a solvent medium and/or diluent and at temperatures of between 40°C and 250°C.

**19.** A process according to claim 18, **characterised in that** a radical initiator is added to the grafting reaction medium, which generates free radicals at temperatures of between 40°C and 250°C selected for the grafting operation, said radical initiator is in particular a peroxidised compound, especially a dihydrocarbyl peroxide, such as lauroyl peroxide, benzoyl peroxide, dicumyl peroxide or ditertiobutyl peroxide.

**20.** A process according to claim 19, **characterised in that** the quantity of radical initiator represents up to 15 %, more specially 0.01 % to 6 % and more particularly 0.05 % to 3 %, by weight of the elastomer.

**21.** A process according to any one of claims 18 to 20, **characterised in that** the grafting reaction medium further contains, by weight of the elastomer, 0.1 to 3.5 % and more specially 0.1 % to 2.5 % of one or more antioxidants.

**22.** A process according to claim 21, **characterised in that**, as the antioxidant, said reaction medium contains, by weight of the elastomer, 0.1 to 1.5 % and preferably 0.1 % to 1 % of block phenol and 0 % to 2 % and preferably 0 % to 1.5 % of a dialkylphenyl triphosphite.

**23.** A process according to claim 22, **characterised in that** the grafting reaction medium further contains both a block phenol and dialkylphenyl triphosphite, the quantity by weight of triphosphite being preferably at least equal and more specially greater than that of the block phenol.

**24.** A process according to claim 16 or any one of claims 17 to 23, **characterised in that** the reaction product constituting the bitumen/functionalised elastomer composition or the product resulting from the incorporation of functionalised elastomer into the bitumen or bitumen mixture has added to it, while stirring at temperatures of between 100°C and 230°C, more particularly between 120°C and 190°C, one or more additives capable of reacting with carboxyl functional groups or carboxyl esters borne by the elastomer and optionally by the bitumen, said reactive additives being in particular primary or secondary amines, especially polyamines, alcohols, especially polyols, aminoalcohols, epoxides or metal compounds, especially composed of metals from groups I,II,III or VIII of the Periodic Table of Elements.

**25.** A process according to claim 24, **characterised in that** the quantity of reactive additive or reactive additives incorporated into said product represents 0.01 % to 10 % and more particularly 0.05 % to 5 % of the weight of the bitumen contained in said product.

**26.** A process according to any one of claims 1 to 25, **characterised in that** the reaction medium formed by bringing into contact the bitumen or bitumen mixture, the elastomer, the functionalising agent and, if used, the peroxidised compound or the reaction product resulting from said bringing into contact or else the product resulting from the incorporation of the functionalised elastomer into the bitumen or bitumen mixture has added to it, while stirring at temperatures of between 100°C and 230°C and more particularly between 120°C and 190°C, from 1 % to 40 %, and more especially from 2 % to 30 %, by weight of bitumen, of a fluxing agent, said fluxing agent being in particular a hydrocarbon oil having a distillation range at atmospheric pressure, determined according to standard ASTM D86-67, of between 100°C and 600°C and situated more especially between 150°C and 400°C.

**27.** A process according to claim 26, **characterised in that** the elastomer, the functionalising agent and, if used, the peroxidised compound or else the functionalised elastomer are incorporated into the bitumen or bitumen mixture in the form of a mother solution of these products in the hydrocarbon oil in particular selected to constitute the fluxing agent.

**28.** A process according to claim 27, **characterised in that** the mother solution, containing either (i) the elastomer,

the functionalising agent and, if used, the peroxidised compound or else (ii) the functionalised elastomer, is mixed with the bitumen or bitumen mixture, at temperatures of between 100°C and 230°C, more particularly between 120°C and 190°C, and while stirring, the resultant mixture continuing to be stirred at temperatures of between 100°C and 230°C, more particularly between 120°C and 190°C, for a period of at least 10 minutes and generally ranging from 10 minutes to 90 minutes, to form a product constituting the bitumen/functionalised elastomer composition.

**29.** Application of the bitumen/functionalised elastomer compositions obtained by the process according to any one of claims 1 to 28 to the production of bitumen/functionalised elastomer binders, said binders consisting of said compositions used as they are or else being formed by dilution of said bitumen/functionalised elastomer compositions with a bitumen or bitumen mixture or with another bitumen/functionalised elastomer composition according to any one of claims 1 to 28 having different characteristics, said bitumen/functionalised elastomer binders may in particular be used, directly or after conversion into an aqueous emulsion, for the production of road paving of the surface coating type, for the production of coatings applied hot or cold, or else for the production of waterproof coverings.

**30.** A mother solution which can be used especially for the preparation of bitumen/functionalised elastomer compositions, comprising a hydrocarbon oil which has a distillation range at atmosphere pressure, determined according to standard ASTM D 86-67, of between 100°C and 600°C and more particularly between 150°C and 400°C and, in solution in the hydrocarbon oil either (i) an elastomer, a functionalising agent and optionally a peroxidised agent or (ii) a functionalised elastomer resulting from the grafting of the functionalising agent on to the elastomer, **characterised in that** functionalising agent consists of at least one compound chosen from the group comprising:

(i) the Carboxylated polythiolesters A complying with the formula

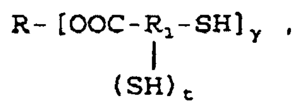

(ii) the polythioethers B arising from the reaction of at least one polythiolester A with ethylene sulphide and containing, on average, 0.1 to 20 and more particularly 0.4 to 12 ($SCH_2$ $CH_2$) moieties per A molecule and
(iii) the polythioethers E arising from the reaction of at least one thiol D compound of the formula

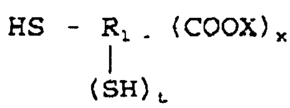

with the ethylene sulphide and containing, on average, 0.1 to 20 and more particularly 0.4 to 12 ($SCH_2CH_2$) moieties per D molecule, wherein in these formulae R denotes a y-valent hydrocarbon radical, optionally oxygenated, having a molecular mass at least equal to 28 and which may be as high as 20000 and more particular up to 12000, $R_1$ represents a $C_1$ to $C_{30}$ (t+2)-valent hydrocarbon radical, $R_2$ represents a $C_1$ to $C_{30}$ (x+t+1)-valent hydrocarbon radical, X denotes a hydrogen atom or a $C_1$ to $C_{12}$ monovalent $R_5$ hydrocarbon radical, t represents zero or one, y is a whole number ranging from 2 to 10 and x denotes a whole number having a value ranging from 1 to 3 with $x+t \leq 3$.

**31.** A mother solution according to claim 30,
**characterised in that** the functionalising agent consists of at least one compound chosen from:

(a) the carboxylated polythiolesters A, complying with the formula

$$R\text{- } [OOC\text{-}R_3\text{-}SH]_y ,$$

(b) the polythioethers $B_1$ arising from the reaction of at least one polythiolester $A_1$ with ethylene sulphide and containing, on average, 0.1 to 20 and more particularly 0.4 to 12 ($SCH_2$ $CH_2$) units per $A_1$ molecule and

(c) the polythioethers $E_1$ arising from the reaction of at least one thiol $D_1$ compound of the formula

$$HS - R_4 - (COOX)_x$$

with the ethylene sulphide and containing, on average, 0.1 to 20 and more particularly 0.4 to 12 ($SCH_2CH_2$) moieties per $D_1$ molecule, wherein in these formulae $R_3$ represents a $C_1$ to $C_{12}$, and more particularly $C_1$ to $C_8$, divalent hydrocarbon radical, $R_4$ denoting a $C_1$ to $C_{12}$, and more particularly $C_1$ to $C_8$, (x+1)-valent hydrocarbon radical, and R, X, y and x having the meanings indicated in claim 1.

**32.** A mother solution according to claim 30 or 31, **characterised in that**, in the formula of the carboxylated polythiolesters A or $A_1$, y is a whole number ranging from 2 to 6 and in particular from 2 to 4, and **in that**, in the formula of the thiol compounds D or $D_1$, x is equal to 1 or 2.

**33.** A mother solution according to any one of claims 30 to 32, **characterised in that** the (t+2)-valent $R_1$, (x+t+1)-valent $R_2$, divalent $R_3$, (x+1)-valent $R_4$ and monovalent $R_5$ hydrocarbon radicals are $C_1$ to $C_{12}$, more particularly $C_1$ to $C_8$ and especially $C_1$ to $C_6$, saturated, linear or branched aliphatic radicals, $C_2$ to $C_{12}$, more particularly $C_2$ to $C_8$ and especially $C_2$ to $C_6$, unsaturated, linear or branched aliphatic radicals, $C_4$ to $C_{12}$, more particularly $C_6$ to $C_8$ cycloaliphatic radicals, or $C_6$ to $C_{12}$, more particularly $C_6$ to $C_8$ aromatic radicals.

**34.** A mother solution according to any one of claims 30 to 33, **characterised in that**, in the formula of the functionalising agent, the x-valent radicals R consist of $C_2$ to $C_{30}$, more particularly $C_2$ to $C_{12}$ and especially $C_2$ to $C_8$, saturated or unsaturated, linear or branched aliphatic radicals, of $C_4$ to $C_{12}$ and preferably $C_6$ to $C_8$ cycloaliphatic radicals, or else of $C_6$ to $C_{12}$ and preferably $C_6$ to $C_8$ aromatic radicals.

**35.** A mother solution according to any one of claims 30 to 33, **characterised in that**, in the formula of the functionalising agent, the x-valent radicals R are divalent polyolefinic hydrocarbon radicals of the formula $-[P]_n-$, in which P represents a unit arising from the polymerisation of one or more $C_2$ to $C_4$ olefinic monomers, especially ethylene, propylene, butene or else butadiene, and n denotes the number of recurrent units forming the chain of the radical, said number n being such that the radical has a molecular mass of between 160 and 20000 and more particularly between 160 and 12000.

**36.** A mother solution according to any one of claims 30 to 33, **characterised in that**, in the formula of the functionalising agent, the x-valent radicals R consist of divalent oxyalkylene or polyoxyalkylene radicals of the formula $-[C_hH_{2h}O]_m-C_hH_{2h}-$, in which h denotes a whole number ranging from 2 to 4 and m represents the number of recurrent units, identical or different, forming the chain of the radical, said number m being such that the radical has a molecular mass of between 70 and 20000 and more particularly between 70 and 12000, said radicals being in particular radicals chosen from the oxyethylene, polyoxyethylene, oxypropylene, polyoxypropylene, oxytetramethylene and polyoxytetramethylene radicals.

**37.** A mother solution according to any one of claims 30 to 36, **characterised in that** the elastomer is chosen from the random or sequential copolymers of styrene and a conjugated diene, especially isoprene, chloroprene, butadiene, carboxylated butadiene and carboxylated isoprene, said copolymers having in particular a styrene content ranging from 5 % to 50 % by weight.

**38.** A mother solution according to claim 37, **characterised in that** the weight average molecular mass of the styrene and conjugated diene copolymers is between 10,000 and 600,000 daltons and preferably between 30,000 and 400,000 daltons.

**39.** A mother solution according to any one of claims 30 to 38, **characterised in that** the hydrocarbon oil is chosen from the petroleum fractions of aromatic nature, the petroleum fractions of naphtheno-aromatic nature, the petroleum fractions of naphtheno-paraffinic nature, the petroleum fractions of paraffinic nature, the coal oils and the oils of vegetable origin.

**40.** A mother solution according to any one of claims 30 to 39, **characterised in that** it contains, by weight of hydrocarbon oil, between 5 % and 40 % of elastomer, between 0.5 % and 10 % of functionalising agent and, by weight of elastomer, 0 % to 15 % of the peroxidised compound and more particularly between 10 % and 30 % of elastomer, between 0.1 % and 8 % of functionalising agent and, by weight of elastomer, 0 % to 10 % of the peroxidised

compound.

41. A mother solution according to any one of claims 30 to 39, **characterised in that** it contains, by weight of hydrocarbon oil, between 5 % and 50 % and more particularly between 10 % and 38 % of functionalised elastomer.